# EUROPEAN PATENT APPLICATION

(11) **EP 1 593 869 A1**
(43) Date of publication of application: **09.11.2005**
(21) Application number: 04702828.7
(22) Date of filing: 16.01.2004
(51) Int. Cl.: F16D 48/06, F16D 23/12, B60K 23/02

(54) **POWER-ASSISTED CLUTCH SYSTEM, METHOD FOR CONTROLLING POWER-ASSISTED CLUTCH SYSTEM, AND PROGRAM FOR CONTROLLING POWER-ASSISTED CLUTCH SYSTEM**

(30) Priority: 22.01.2003 JP 2003013439
(71) Applicant: YAMAHA HATSUDOKI KABUSHIKI KAISHA, Iwata-shi, Shizuoka 438-8501 (JP)
(72) Inventor: NOGAMI, Eiji, ** (JP); MIZUNO, Yutaka, ** (JP)
(74) Representative: Grünecker, Kinkeldey, Stockmair & Schwanhäusser Anwaltssozietät
(86) International application number: PCT/JP2004/000302
(87) International publication number: WO 2004/065812

(57) **Abstract**

A power assist clutch system according to the invention includes: a detecting portion for detecting an operation force when a driver operates a clutch operation part; a control portion for outputting a control signal for controlling an assist force based on an operation force detected by the detecting portion; an assist force generating portion for generating an assist force in accordance with the control signal output from the control portion; and a drive force generating portion for generating a drive force for operating a clutch by composing an assist force and an operation force transmitted through a drive force transmission system for transmitting a drive force to the clutch.

## Description

The present invention relates to a power assist clutch system for assisting the engaging and disengaging operations of a clutch which are caused by an operation force transmitted from a clutch operation part in an automotive vehicle, a method for controlling the power assist clutch system, and a program for controlling the power assist clutch system.

Of those automotive vehicles, such as a two-wheel vehicle and an automobile (four-wheel vehicle) in which the clutch is put in engagement or disengagement by operating a clutch operation part, such as a clutch lever or a clutch pedal, the vehicle of a large displacement volume has a high absolute load for putting the clutch in engagement and disengagement. Accordingly, a driver for driving such an automotive vehicle sometimes has a sense of an over load in operating the clutch lever, even if an operation efficiency of the clutch release mechanism is improved.

In the case of the two-wheel vehicle, even if its displacement volume is small, when a driver whose gripping force is relatively weak operates the clutch lever in a long time drive, the driver has a sense of overload in his clutch lever operation in some types of vehicles.

To improve the operability of the clutch operation part, a clutch power assist device has been proposed in which in the two-wheel vehicle, a force for supplementing an operation force applied from the clutch operation part is applied to a member, such as a push rod, which operates for clutch engagement/disengagement, in accordance with an operation of the clutch lever by utilizing a rotational force of an electric motor, a hydraulic pressure, or the like (See JP-A-6-117450).

In the above-described clutch power assist device, however, the load of the driver is reduced by the assist force from the assist force generating means, indeed. In such a lever operation that a clutch lever operation speed greatly varies during the stroke, for example, the returning of the clutch lever is stopped during the stroke to set the clutch to be put in a half-clutching state, the driver sometimes has an unnatural feeling when he operates the clutch lever.

The assist force from the assist generating means oppositely or resistively acts against a motion of a driven member (member operating for the clutch releasing) which links in operation with a change of operating speed of the clutch lever. As a result, a rate at which the output force from the assist force generating means is transmitted as an assist force to the driven member greatly varies, and the assist force to originally be applied at an operation position of the clutch lever varies, and sometimes the driver have an unnatural feeling in operating the clutch lever.

Accordingly, an object of the present invention is to provide a power assist clutch system which lessens a load of the driver when he operates a clutch operation part and generates an assist force in accordance with an operation input condition of the clutch operation part to thereby realize a quick and smooth control, a method of controlling the power assist clutch system and a program for controlling the power assist clutch system.

This objective is solved by a clutch device having the features of claim 1, by a method for controlling a clutch device having the features of claim 9, and by a program having the features of claim 16.

In the following, the present invention is explained in greater detail with respect to several embodiments thereof, in conjunction with the accompanying drawings, wherein:
Fig. 1 is a block diagram showing a power assist clutch system which is a first embodiment;
Fig. 2 is a block diagram showing a load detecting device as a detector portion in the power assist clutch system of the first the embodiment;
Fig. 3 is a view showing a mounting structure of a sensor portion of the power assist clutch system of the first embodiment;
Fig. 4 is a partial sectional view showing a construction of the sensor portion of Fig. 3;
Fig. 5 is a cross sectional view taken on line V - V when viewed in a direction of an arrow A in Fig. 4;
Fig. 6 is a partial sectional view showing another construction of the sensor portion which may be used in the power assist clutch system of the first embodiment;
Fig. 7 is a graph showing a load characteristic of the clutch lever;
Fig. 8 is a view schematically showing a construction of the power assist clutch system of the first embodiment;
Fig. 9 is a partially cross sectional view showing a key portion of a clutch portion of a two-wheel vehicle, which is equipped with a cam-type release mechanism;
Fig. 10 is a view schematically showing another construction of the power assist clutch system of the first embodiment;
Fig. 11 is a model diagram of the power assist clutch system when viewed in a direction of an arrow B in Fig. 10;
Fig. 12 is a partial cross sectional view showing a key portion of a clutch portion of a two-wheel vehicle, which is equipped with a rack/pinion release mechanism;
Fig. 13 is a flow chart showing the contents of a process of controlling the power assist clutch system of the first embodiment;
Fig. 14 is a partial cross sectional view showing a construction of a sensor portion in a power assist clutch system which is a second embodiment;
Fig. 15 is a cross sectional view taken on line XV - XV when viewed in a direction of an arrow C in Fig. 14;
Fig. 16 is a diagram schematically showing a power assist clutch system which is a third embodiment;
Fig. 17 is a partial sectional view showing a construction of the sensor portion of Fig. 16;
Fig. 18 is a cross sectional view taken on line XVIII - XVIII when viewed in a direction of an arrow D in Fig. 17;
Fig. 19 is a partial sectional view showing another construction of the sensor portion in the power assist clutch system of the third embodiment;
Fig. 20 is a partial cross sectional view showing a construction of a sensor portion in a power assist clutch system which is a fourth embodiment;
Fig. 21 is a cross sectional view taken on line XXI - XXI when viewed in a direction of an arrow E in Fig. 20;
Fig. 22 is a partial cross sectional view showing a construction of a sensor portion in a power assist clutch system which is a fifth embodiment;
Fig. 23 is a diagram schematically showing the power assist clutch system of the fifth embodiment;
Fig. 24 is a partial cross sectional view showing a key portion of a clutch portion of a two-wheel vehicle, which is equipped with a hydraulic release mechanism; and
Fig. 25 is a partial cross sectional view showing a construction of a sensor portion in a power assist clutch system which is a sixth embodiment.

Hereinafter,preferred embodimentswillbe described with reference to the accompanying drawings.

### (First Embodiment)

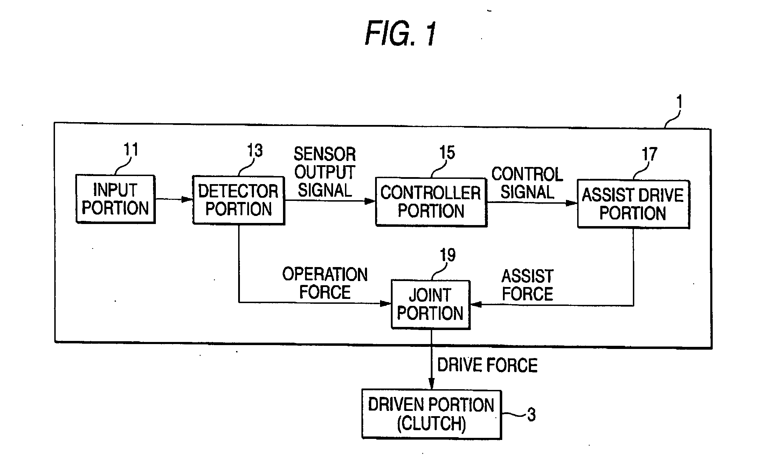

Fig. 1 is a block diagram showing a configuration of a power assist clutch system which is a first embodiment. A power assist clutch system 1 shown in the figure is made up of an input portion 11 as a clutch operation part to which an operation force generated when a driver operates a clutch is input, a detector portion 13 which monitors an operation input condition to the input portion 11 by the driver, and detects load, torque, displacement or the like, a controller portion 15 as control means for generating control signals in accordance with an output signal of the detector portion 13, an assist drive portion (assist force generating portion) 17 as an assist force generating means for generating an assist force in accordance with a control signal from the controller portion 15, and a joint portion 19 as a drive force generatingmeans which composes an operation force input from the input portion 11 and an assist force generated by the assist drive portion 17 to generate a drive force of a clutch in a driven part 3.

Description of the embodiment will be given by using a case where a clutch mechanism incorporated into a two-wheel vehicle, such as a motorcycle, is controlled by using a power assist clutch system 1, is used in the description of the embodiment. Here, the input portion is a clutch lever provided in a handle of a motorcycle.

The detector portion 13 may detect an operation input condition from the input portion 11 in various forms. In a case where the input portion 11 uses a load sensor or a strain load cell, the detector portion 13 detects the operation input in the form of an operation load. Accordingly, in a case where the input portion 11 is a clutch lever, the operation input is detected in the form of a rotational angle of the clutch lever using a rotary potentiometer. Further, a stroke of a wire coupled to the clutch lever using a linear displacement, a rotation torque by a torque sensor or the like may also be used for the operation input. In the instant embodiment, a case of detecting the operation load when the clutch lever is operated will be described, while the operation input may take any of various forms described above. Further, the detector portion 13 may also be constructed in combination with a position sensor for detecting a change of a position of the clutch lever in addition to the load.

The controller portion 15 includes an electronic device (referredto as a computer) having an operation/control function based on a CPU (central processing unit). In the computer, a control program for controlling the power assist clutch system 1 is electronically stored in a memory (main memory), such as a RAM (random access memory).

The controller portion 15 thus constructed outputs a control signal for generating an appropriate assist force in accordance with an operation input condition of the clutch lever, detected by the detector portion 13, to thereby carry out a smooth control and to quickly optimize the power assist clutch system 1. If necessary, the controller portion may have a fail-safe function as an auxiliary function provided in preparation for occurrence of the out-out-step, locking of the engine and other accidental troubles.

The assist force in the assist drive portion 17 may be generated by an actuator utilizing a motor, hydraulic pressure, hydraulic pressure, pneumatic pressure, or the like.

The joint portion 19 connects the assist drive portion 17 to a related part of a clutch release mechanism within the clutch by suitable means, suchasawire, a cable, a link structure, gears, and hydraulic or pneumatic pressure piping.

For an emergency measure, it is desirable that the clutch is manually operable at any time and the power assist clutch system is separable from the clutch mechanism whenever required. Additional use of a function to display a trouble, if occurs, is more desirable.

To secure the versatility of those functions described above, it is desirable to design the power assist clutch system such that it can be attached to every type of two-wheel vehicle, if necessary. In this sense, it is more desirable to use the detector portion 13, the controller portion 15, and the assist drive portion 17, which may be used commonly for different types of vehicles.

### <Load detecting device>

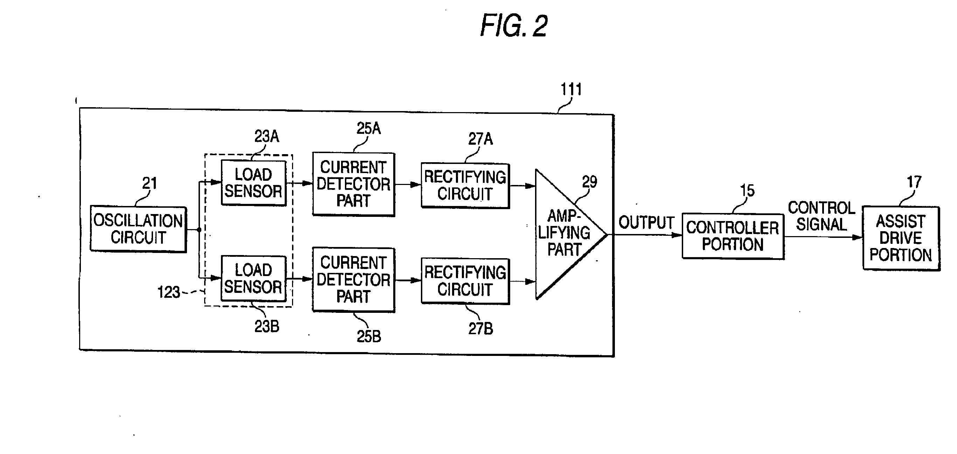

Fig. 2 is a block diagram showing a load detecting device which is an embodiment when the detector portion 13 detects a load. A load detector device 111 as the detector portion 13 shown in the figure takes the form of a differential amplifier circuit which amplifies a difference between output signals from a couple of magnetostrictive load sensors 23A and 23B and outputs the amplified one.

More specifically, the load detector device 111 is made up of an oscillation circuit 21 for oscillating an AC signal and applying a voltage to the circuit, two magnetostrictive load sensors 23A and 23B for sensing a load receiving fromoutside, current detecting parts 25A and 25B formed with detecting resistors or the like for measuring output signals from the load sensors in the form of differences between them and reference voltages, rectifying circuits 27A and 27B formed with diodes or the like for rectifying and smoothing the output signals, and an amplifying part 29, such as an operational amplifier, for obtaining a difference between the output signals from the load sensors and amplifying the difference. Of those components, the current detecting part 25A (25B; the corresponding component will be designated by parenthesized reference numeral. The same shall apply hereunder) and the rectifying circuit 27A (27B) form a first signal detecting part (second signal detecting part) for detecting a signal output from the magnetostrictive load sensor 23A (23B). In the load detector device 111, the magnetostrictive load sensors 23A and 23B will be generally represented by a sensor portion 123, and the remaining parts will be generally represented by a signal detecting portion 125.

In the load detector device 111 of the instant embodiment, the parts other than the sensor portion 123 are preferably mounted on the same board as of the controller portion 15. The current detecting parts are spatially and symmetrically arranged on the board, and the rectifying circuits are also arranged in a similar fashion. By so doing, the temperature characteristic is improved and the detecting accuracy is further enhanced.

### <Construction of the sensor portion>

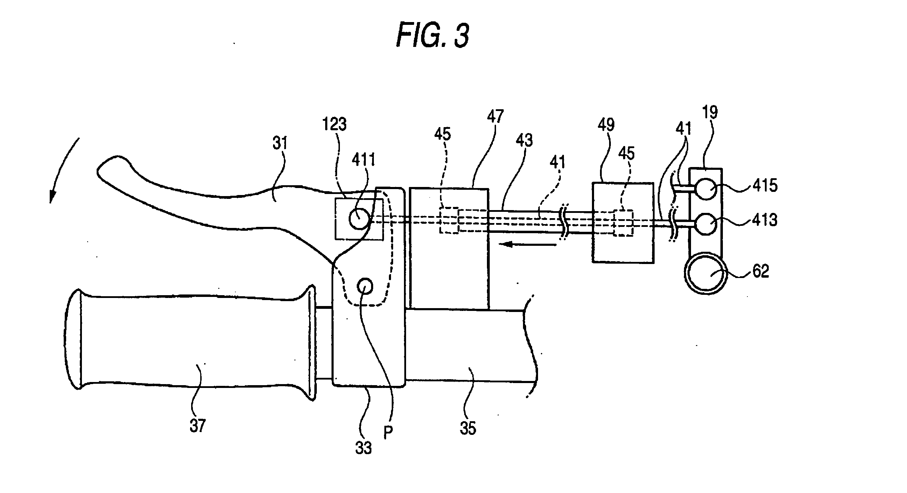

Fig. 3 is a diagram for explaining a mounting structure for incorporating the sensor portion 123 containing the two load sensors into the clutch lever 31.

The clutch lever 31 is provided on a lever holder 33 such that it is rotatable about its rotational center P. To start, a driver grips a handle grip 37 with the thumb and the palm (of his left hand), and pulls the clutch lever 31 to the handle grip 37 with the remaining fingers. Then, the clutch lever 31 turns till it reaches its maximum stroke (in a direction of an arrow in the drawing (counterclockwise).

One end 411 of a wire 41 is coupled with the clutch lever 31, while the other end 413 of the wire is coupled with the j oint portion 19. The joint portion 19 is provided on the driven portion 3 in a state that it is rotatable about a cam shaft 62. A wire 41, which is coupled at the end 415 with the joint portion 19, transmits an assist force from the assist drive portion 17. A torsion spring abuts on the rotary shaft to apply a pre-load thereon, and the wire 41 is tensioned in a predetermined direction without any slack.

A mid portion of the wire 41 is covered with an outer tube 43. Two tube ends 45 provided at both ends of the outer tube 43 are fixed to a wire fixing part 47 of the handle and a wire fixing part 49 of the clutch, respectively. Following a turning operation of the clutch lever 31, the wire 41 moves toward the clutch lever 31 (in a direction of an arrow (directed to the left) in the figure) a minute distance (about 10mm to 15mm).

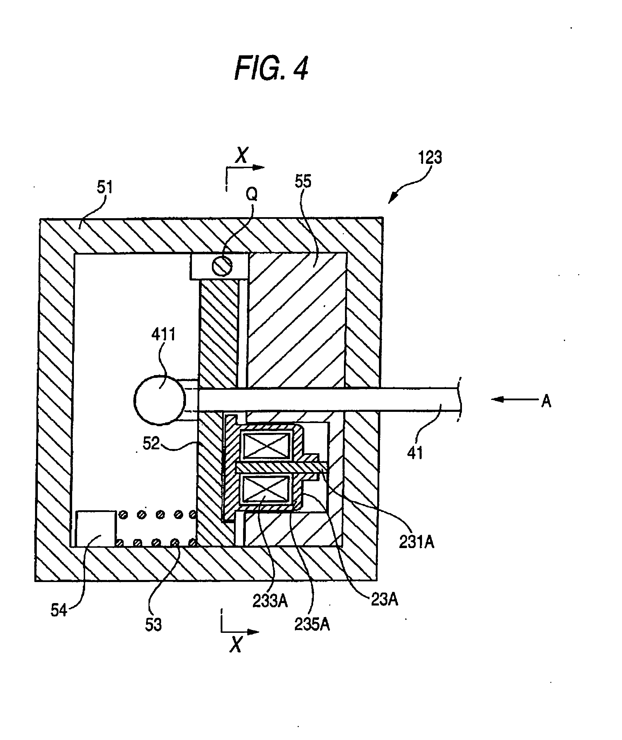

The sensor portion 123 directly detects a load which is applied to the driver when he operates the clutch lever 31. Fig. 4 is a partial cross sectional view showing a detailed construction of the sensor portion 123 in which a magnetostrictive load sensor is used for the load sensor. Reference numerals 23A and 23B, which were used for designating the load sensors in the above description, are also applied to the magnetostrictive load sensors.

A ferromagnetic material, e.g., iron, nickel, chromium or ferrite, which has a reverse magnetostrictive effect, viz., whose magnetic permeability varies when it is strained, is used for the magnetostrictive load sensor 23A shown in Fig. 4.

The magnetostrictive load sensor 23A includes at least a load receiving part 231A as a magnetostrictive element which is made of ferromagnetic material and is shaped like a rod for directly receiving a load, a coil 233A wound on a bobbin placed around the load receiving part 231A, and a case 235A, made of ferromagnetic material, for containing them. The coil 233A is electrically connected to the signal detecting portion 125 (the oscillation circuit 21 and the current detecting part 25A), although not shown. One end of the load receiving part 231A is protruded from the case 235A since it receives the load.

The load receiving part 231A is magnetized by current flowing through the coil 233A. When pressure load is imparted on the load receiving part 231A, the reverse magnetostrictive effect occurs it. Accordingly, its magnetic permeability varies and AC impedance of a circuit including inductance of the coil 233A varies. The load can be electromagnetically detected by measuring at a signal detecting portion a voltage variation between both ends of the coil 233A, which is caused by the impedance variation.

The sensor portion 123 further includes a holder 52 to which the tube end 45 of the outer tube 43 covering the wire 41 passing through the sensor unit cover 51 is fit. An appropriate clearance, not shown, is present around the wire 41 and with the clearance, the wire is smoothly slidable (The same shall apply hereunder). On end of an elastic member 53, such as a spring, is in abutment with the holder 52, while the other end of it is fixed at a fixing part 54. Accordingly, a predetermined load is applied to the holder 52 in advance.

A case 235A of the magnetostrictive load sensor 23A abuts on a planar surface of the holder 52, which is opposite to its planar surface on which the end 411 of the wire 41 abuts. When the clutch lever 31 is operated and the holder 52 is turned about the rotational center Q, the load receiving part 231A of the magnetostrictive load sensor 23A is pressed by a pressing member 55. As a result, a load applied to the magnetostrictive load sensor 23A varies in value. An impedance variation by the load value variation is detected by the signal detecting portion 125.

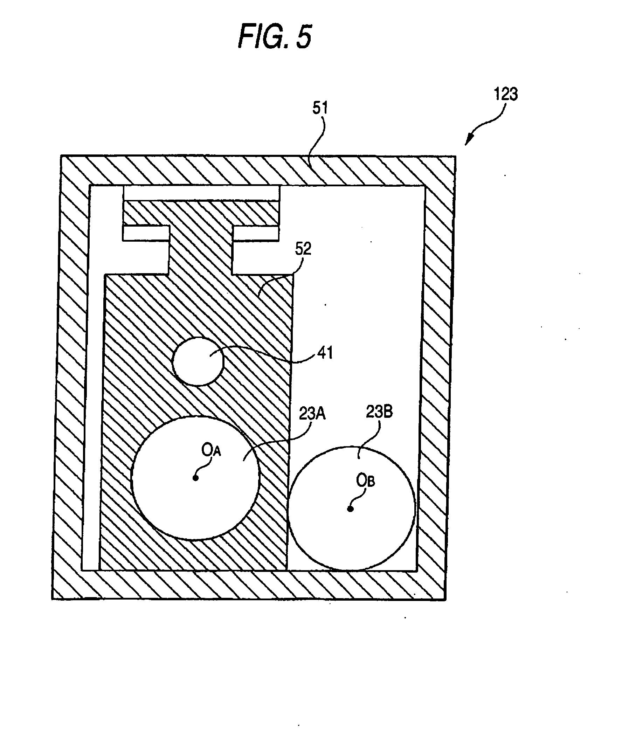

As shown in Fig. 5 which is a cross sectional view taken on line V - V when viewed in a direction of an arrow A in Fig. 4, another magnetostrictive load sensor 23B having the same construction as of the magnetostrictive load sensor 23A is provided in the sensor portion 123 in the instant embodiment. As in the magnetostrictive load sensor 23A, a load equal to that applied to the magnetostrictive load sensor 23A is applied in advance to the load receiving part 231B (not shown) of the magnetostrictive load sensor 23B by means of an elastic member, such as a spring. The load receiving part 231B is constructed so as not to receive a pressure generated through the operation of the clutch lever 31, and a fixed load is constantly applied to the load receiving part. Therefore, when the clutch lever 31 is operated, a difference is produced between the loads applied to the magnetostrictive load sensors 23A and 23B, and the difference is amplified by the signal detecting portion 125, whereby a load applied to the clutch lever 31 can be detected accurately.

A symmetrical arrangement of the two magnetostrictive load sensors with respect to a line X - X in Fig. 4 will suffice for the invention. Additionally, it is more preferable that those sensors have some symmetricity in their arrangement. For example, the center axes OA and OB of the two magnetostrictive load sensors 23A and 23B pass through a circle centered at the center axis O of the handle 35. By so arranging them, the temperature characteristic is improved, and a detection accuracy of the load detector device 111 is further enhanced.

To use the sensor portion 123 thus constructed, there is no need of greatly changing the conventional wire-type clutch system, and all one has to do is to merely replace the clutch lever 31. Accordingly, the power assist clutch system 1 may be post-attached whenever required.

When the two magnetostrictive load sensors are disposed below the rotational center Q as viewed downward in a direction in which the wire 41 passes through the holder 52 from the rotational center Q, the improvement of the workability and size reduction of the sensor portion 123 are realized.

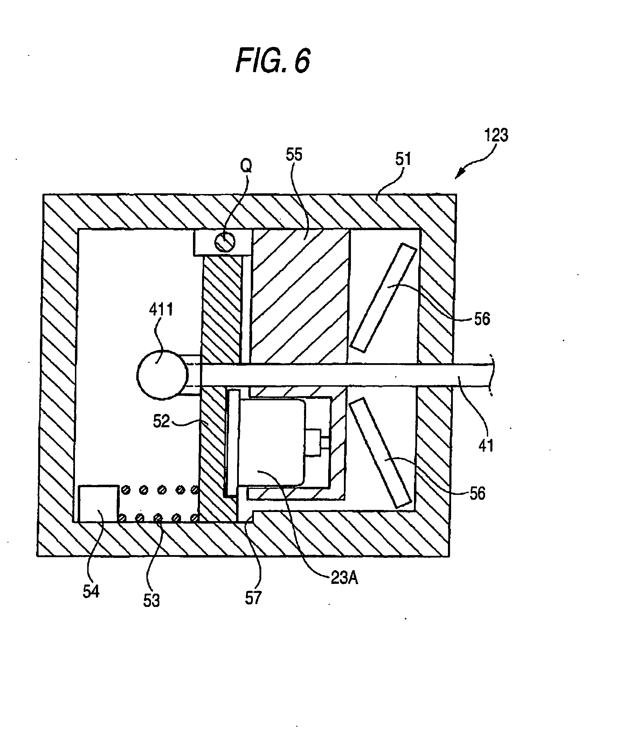

In the instant embodiment, an overload preventing mechanism may be added to the sensor portion 123. Fig. 6 is a partial sectional view showing a detailed construction of the sensor portion 123 additionally equipped with an overload preventing mechanism. In the figure, an external appearance of the magnetostrictive load sensor 23A is illustrated, and its specific internal construction is the same as of that shown in Fig. 4, as a matter of course.

In this case, a belleville spring 56 is provided between the sensor unit cover 51 and the pressing member 55 to apply a preset load to the magnetostrictive load sensor 23A. The holder 52 for pressing the magnetostrictive load sensor 23A moves when its pressing force exceeds the preset load. When its pressing force reaches an overload region, the holder 52 comes in contact with a flange-shaped stopper 57 provided on the sensor unit cover 51, whereby an excessive load is prevented from being applied to the magnetostrictive load sensor 23A and hence the magnetostrictive load sensor 23A is protected.

With provision of the overload preventing mechanism, the durability of the magnetostrictive load sensor 23A is improved.

### <Clutch lever load characteristic>

A load characteristic of the load applied to the driver when the clutch lever 31 is operated will be described.

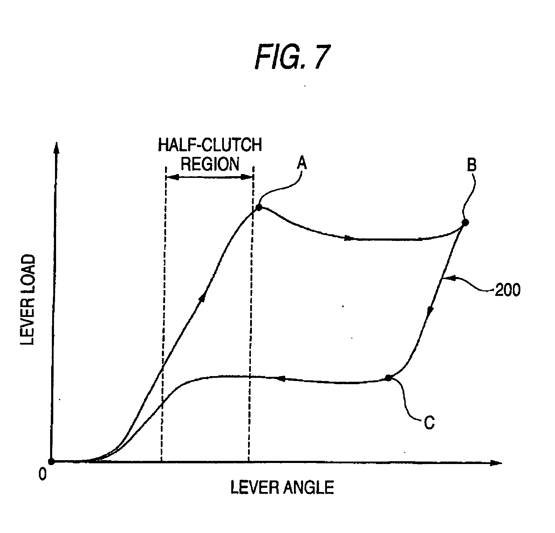

Fig. 7 is a graph showing a relation between a load applied to the clutch lever 31 with respect to a rotation angle of the clutch lever 31 when the driver operates the clutch lever 31. In the figure, the abscissa represents a rotation angle (lever angle) of the clutch lever 31, and the ordinate represents a load (lever load) applied to the clutch lever 31. On the abscissa, "0" indicates non-operation of the clutch lever 31.

A hysteresis curve 200 represents a history of a load variation ranging from a position where the driver starts to operate the clutch lever 31 to an original position of the clutch lever.

When the driver starts to operate the clutch lever 31, the lever load sharply increases up to a maximum load point A near a half-clutch region (O → A). In this section O → A, the driver senses that the clutch lever 31 is "heavy".

In a range from a maximum load point A to a maximum stroke point B at which the driver fully grips the clutch lever 31 (a de-clutched state), the load which varies within values, which are somewhat smaller than the maximum load value, but are substantially equal, is almost stably applied to the clutch lever (A → B). In some types of vehicles, the load applied at the maximum stroke point B sometimes takes the maximum value in the entire history of the load variation.

Thereafter, when the clutch lever 31 is returned to the original position O, the lever load sharply decreases to a position near a waiting-for-signal point C corresponding to a position of the clutch lever 31 at which the vehicle stops waiting for the signal (B → C). Then, the load keeps its value substantially equal, and after passing the half-clutch region, the load returns to the original position O (C → O).

As seen also from Fig. 7, in the operation of the clutch lever 31 for clutching and de-clutching, the load values when the lever angle increases are larger than those when the lever angle decreases. If an assist force adjusting means for appropriately adjusting a ratio of an assist force when the lever-angle increases and the lever-angle decreases to a load (assist ratio) is incorporated into the power assist clutch system 1, the assist force can be generated according to an operation condition of the clutch lever 31. In this case, the assist ratio may be adjusted such that the assist ratio is set to be large in the section O → A where the driver has a sense of the heaviest load, and the assist ratio is set to be small in the section B → C → O. Such an assist force adjusting means may be provided in the controller portion 15, as a matter of course.

An absolute value of the load applied to the clutch lever 31 is different by the types of vehicles, displacement volume and the like. Further, a load value of the load sensed by the driver is different by the drivers. The best assist ratio is different not only by the types of vehicles but also by the drivers which operate the clutch lever 31. For this reason, it is more preferable that the assist force adjusting means further includes a setting mechanism capable of changing the assist ratio. In this case, some assist ratios are stored in the memory of the controller portion 15 in the manufacturing stage. The driver selects a desired one from those stored assist ratios, and inputs the selected assist ratio through the input part of the controller portion 15. Further, the driver may set and input a desired assist ratio.

The hysteresis curve 200 of Fig. 7 is presented by way of example, and the load characteristic of the clutch lever 31 is different by the types of vehicles. It is evident that it is possible to adjust and change the assist ratio depending on the load characteristic of the clutch lever 31 not only in the instant embodiment but also in other embodiments.

### <System Configuration>

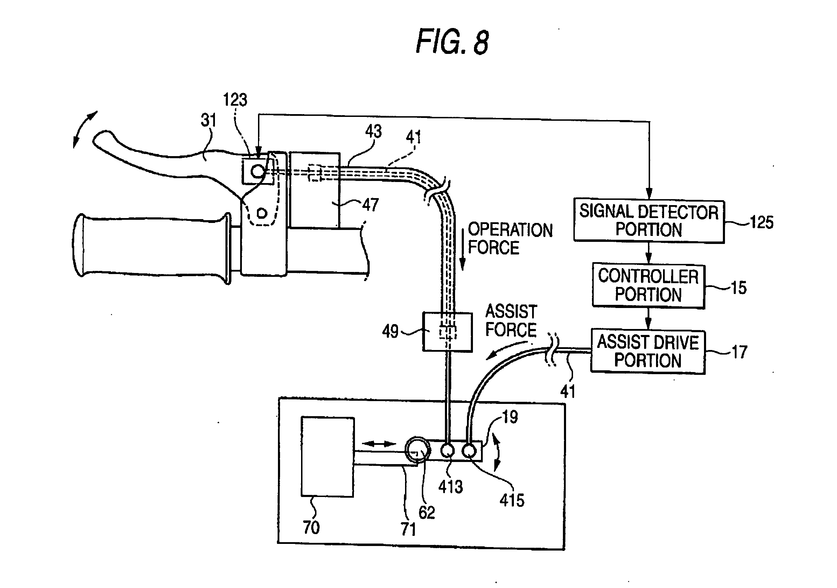

Fig. 8 is a view schematically showing a construction of the power assist clutch system 1 using the sensor portion 123 thus constructed. A signal detected by the sensor portion 123 is transmitted to a signal detecting portion 125 which in turn transmits it as a sensor output signal to the controller portion 15. In the controller portion 15, a control signal based on the sensor output signal is output to a assist drive portion 17. The assist drive portion 17 generates an assist force based on the control signal. A manual operation from the clutch lever 31 and an assist force from the assist drive portion 17 are separately transmitted to the joint portion 19. The joint portion 19 composes an operation force transmitted through the wire 41 from the clutch lever 31 and the assist force transmitted from the assist drive portion 17, and transmits the resultant force to the driven portion 3.

In Fig. 8, the power assist clutch system 1 is shown in model form. Accordingly, a wiring connecting the sensor portion 123 to the signal detecting portion 125 is simplified as a single line, which is different from an actual wiring. Actually, the wiring from the oscillation circuit 21, and the wiring from the magnetostrictive load sensors 23A and 23B to the current detecting parts 25A and 25B are applied to between them.

The driven portion 3 includes a clutch release mechanism for transmitting a drive force from the joint portion 19 to the clutch portion 70. Fig. 8 shows in model form a scheme of the power assist clutch system in which a cam type release mechanism using a cam shaft 62 is used for the clutch release mechanism. In the figure, the construction (transmission and the like) of the driven portion 3 except the clutch portion 70 is omitted.

Operations of the driven portion 3 will be described.

When the pull lever (also called a clutch release lever) as the joint portion 19 to be engaged with the clutch lever 31 and the assist drive portion 17, are turned, the cam shaft 62 provided passing through its rotational center is rotated together with the turning thereof. When the cam crest part comes in contact with the push rod 71, it pulls out the push rod 71 to transmit a drive force to the clutch portion 70.

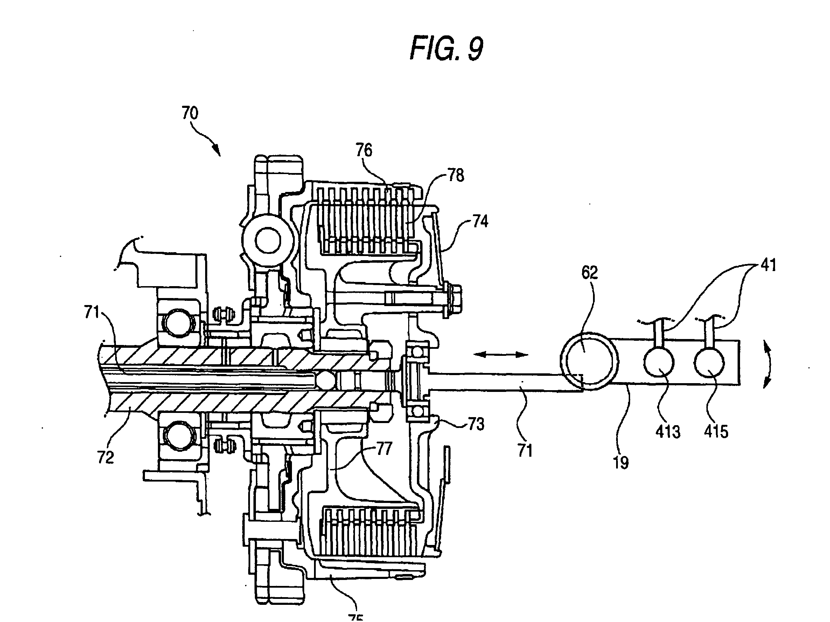

Fig. 9 is a partial cross sectional view showing a detailed construction of a major portion of the clutch portion 70. The clutch portion 70 shown is a multi-plate clutch which is generally used in a motorcycle engine. By the operation of the clutch lever 31, a push rod 71 passing through a hollowed axial part of a main shaft 72 is moved in its axial direction. By pressing the pressure plate 73, a friction engagement of plates 76 located closer to a clutch outer 75 with discs 78 closer to a clutch inner 77, which are in press contact with each other by an elastic force of a clutch spring 74, with the pressure plate 73 being interposed therebetween, is removed. The interlocking of the clutch outer 75 with the clutch inner 77 is removed to thereby effect the clutch release.

The pull lever 61 which uses the cam shaft 62 for its rotary shaft is located adjacent to the end of the push rod 71. Wires 41 extended from the joint portion 19 are coupled to the pull lever 61. By a drive force transmitted through the wire 41 from the joint portion 19, the pull lever 61 is turned about the center shaft of the cam shaft 62. During the turning operation, the cam crest part formed on the cam shaft 62 pulls out the push rod 71. Amovement distance of the pressure plate 73, caused by the operation of the clutch lever 31, is about 2mm. A half-clutch state is set up when the pressure plate 73 is moved about 1mm at most.

Through the engaging/disengaging operations of the clutch portion 70, a rotational drive force transmitted from the crank shaft in the driven portion 3 may be interruptively transmitted to a drive system located downstream of the transmission (not shown).

The clutch portion 70 which may be used in the instant embodiment may be of the dry type or of the wet type.

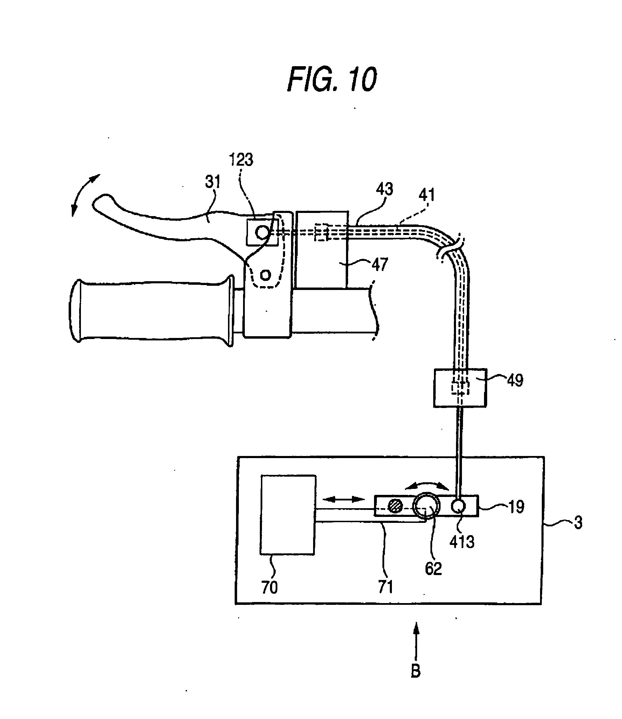

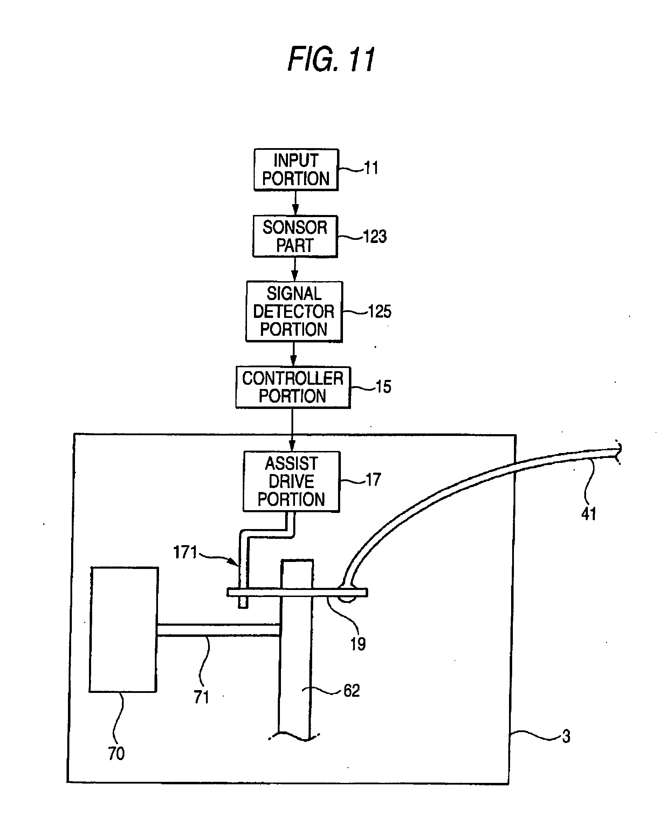

The method of turning the pull lever 61 when the cam type release mechanism is used is not always limited to the above-mentioned one. As shown in Figs. 10 and 11 (a model diagram as viewed in a direction of an arrow B in Fig. 10), an assist force from the assist drive portion 17 is generated when an actuator forming the assist drive portion 17 is driven by the assist drive portion 17, in the embodiment. A rotational drive force by the motor is transmitted to the joint portion 19, through the assist force transmission shaft 171 for transmitting a drive force of the assist force. It cooperates with an operation force transmitted through the wire 41 from the clutch lever 31 to turn the joint portion 19. Accordingly, the assist drive portion 17 is appropriately disposed in a space in the driven portion 3. Constructions and operations of other portions are the same as those already described (see Fig. 8).

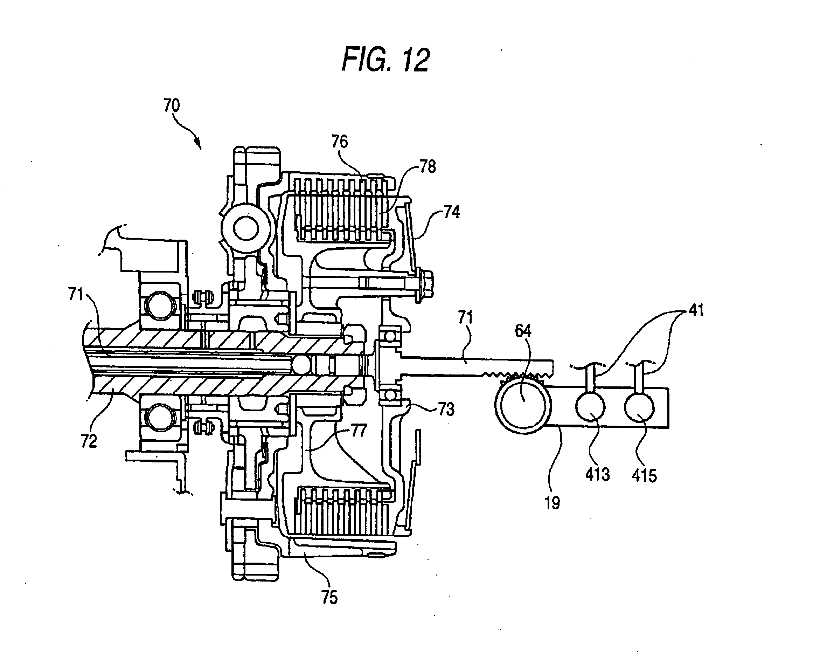

The clutch release mechanism per se is not limited to the cam type one, but may be of the rack/pinion type, the ball spring type or the like. When the rack/pinion type clutch release mechanism is used, the pinion gear 64 is turned by operating the joint portion 19 in accordance with a drive force transmitted through the wire 41, as shown in partial cross sectional view of Fig. 12. The push rod 71 moves toward the outside of the engine to pull out the pressure plate 73 to disengage the clutch. Also in the case of the clutch release mechanism of the ball screw type (not shown), a drive force for rotating the screw on the movable side is generated as in the above case.

The power assist clutch system described above enables the driver to operate the clutch lever by a force, which is weaker than in the conventional system. Accordingly, the load of the driver when he operates the clutch lever is reduce, and hence, even after a long time drive, he does not feel fatigued.

The operation force of the clutch lever 31 is directly detected for the control. Therefore, when comparing with the system using only position information of the clutch lever, the control accuracy is good, and the system can quickly adapt to the load characteristic applied when the clutch lever is operated. Consequently, the system reliability is improved, and an optimum control based on the operation input condition is possible.

### <Control method of the power assist clutch system>

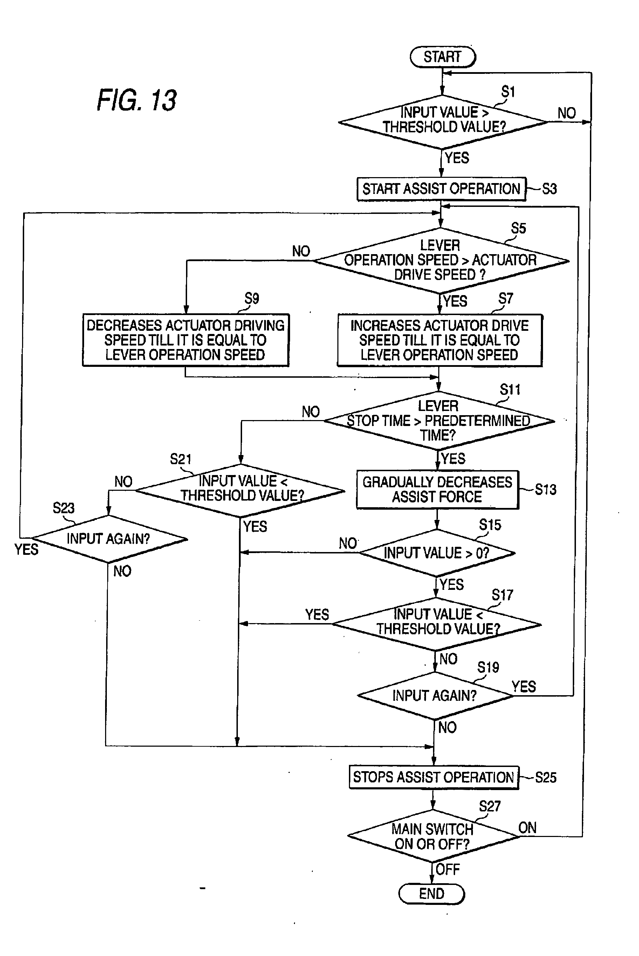

A control method of the power assist clutch system 1 thus constructed will be described with reference to a flow chart shown in Fig. 13. The control method shown in the figure will be similarlyperformedalso in embodiments to be described later.

To start, the detector portion 13 detects an operation input value from the clutch lever 31. The controller portion 15 judges whether or not a value of a sensor output signal as the detection result exceeds a predetermined threshold value (step S1). If it exceeds the threshold value (YES), the assist operation starts (step S3). If it does not exceed the threshold value (NO), the controller portion continues the execution of the process of the step S1.

The term "threshold value" is such a value as to allow the driver to judge that he operated the clutch lever at his will. The input value varies depending on a physical quantity that the detector portion 13 detects. When the load is detected, the input value is a load value, and when a rotational speed, a displacement, or the like is detected, the input value is a rotational speed value, a displacement value or the like. Accordingly, the threshold value per se is set by a physical quantity based on a quantity detected.

When the assist operation starts in a step S3, the controller portion 15 compares an operation speed of the clutch lever 31 by the driver with an actuator driving speed in the assist drive portion 17 (step S5). If the actuator driving speed is larger than the operation speed (YES), the actuator driving speed is decreased (step S7) . If the actuator driving speed is smaller than the operation speed (NO), a control signal to increase the actuator driving speed is generated (step S9) . As a result, the controller portion carries out such a control that the actuator driving speed always follows up the operation speed of the clutch lever 31 by the driver.

In measuring those speeds in the controller portion 15, those are obtained by calculating a displacement of the load sensor or the potentiometer. In the case of the actuator, an actuator driving speed can be measured by installing an encoder to the actuator.

Thereafter, when the clutch lever 31 is stopped during its turning operation, it is determined whether the stop time is a predetermined time or longer (step S11).

If in the step S11, the stop time of the clutch lever 31 is the predetermined time or longer (YES), such a control signal as to gradually decrease the assist force so that the assist force becomes 0 after a predetermined time elapses is generated (step S13). If the assist operation continues in a state that the driver stops the operation of the clutch lever 31, the seizure of the actuator will occur. Such a control signal is generated to prevent the seizure of the actuator in advance.

When the input value becomes zero during the process of decreasing the assist force (NO in the step S15), the assist operation is stopped (step S25). If the input value is not zero (YES in the step S15), the controller portion advances to a step S25 when the input value falls below the threshold value (NO in the step S17), and stops the assist operation.

If the input value is not below the threshold value in the step S17 (NO in the step S17), the controller portion advances to a step S19.

In a step S19, the controller portion judges whether or not the operation speed of the clutch lever 31 and the actuator driving speed are to be input again. If those speeds are to be input again (YES), the controller portion returns to the step S5 and repeats the above-mentioned process. If the speeds are not input again (NO), the controller portion stops the assist operation (step S25).

If in the step S11, the stop time of the clutch lever 31 does not reach a predetermined time (NO), the controller portion compares the input value from the clutch lever 31 with the threshold value (step S21). If the input value is smaller than the threshold value (YES in step S21), the controller portion advances a step S25, and stops the assist operation. If the input value is larger than the threshold value (NO in the step S21), the controller portion advances to a step S23. As in the step S23, the controller portion judges whether or not the operation speed of the clutch lever 31 and the actuator driving speed are to be input again. If those speeds are to be input again (YES), the controller portion returns to the step S5. If the speeds are not input again (NO), the controller portion advances to the step S25, and stops the assist operation.

After stopping the assist operation in the step S25, the controller portion returns to the step S1 and repeats the process mentioned above, so long as the main switch is in an on state (ON in the step S27).

When the main switch is turned off in the step S25 (OFF), the control process of the embodiment ends.

In the control method of the power assist clutch system, when the load applied to the clutch lever is increasing, the operation load is reduced, and the operation speed is increased. When the load is decreasing, the assist operation is not performed or the assist ratio is reduced. Accordingly, a clutch engaging state that the driver desires is quickly set up, and enhancement of the operability is realized.

The control method includes a feedback mechanism. Therefore, the control accuracy and the reliability are improved.

In the first embodiment described above, the load applied to the driver when he operates the clutch operation part is reduced, and the assist force is generated according to an operation input condition of the clutch operation part, thereby enabling quick and smooth control.

In the embodiment, when the input value, such as a load, detected by the detector portion is large, the assist force is large. Accordingly, the load of the driver may be limited to a fixed level or lower. Accordingly, the operability is enhanced.

Particularly, when a load applied to the clutch lever of the motorcycle is detected, the system can quickly adapt to the load characteristic of the clutch lever, thereby enabling a real time control which meets an actual drive situation.

Further, if the sensor portion is constructed as a post-attachment type sensor portion, it is applicable to any type of vehicle and its cost to manufacture is small.

While the magnetostrictive load sensor is used for the load sensor in the instant embodiment, the load sensor may be of the strain gauge type, the capacity type, the potentiometer type, or the pressure-sensitive rubber type. as a matter of course.

The sensor portion 123 may be constructed so as to detect a load applied to the end 413 to be engaged with the joint portion 19, while it is contained in the clutch lever 31 in the embodiment mentioned above. In this case, the clutch lever 31 remains unreplaced, the construction of the joint portion 19 is somewhat changed, and the magnetostrictive load sensor 23 is brought into contact with the end 413 to directly detect the load. The remaining portions are substantially the same as thosementioned above.

### (Second Embodiment)

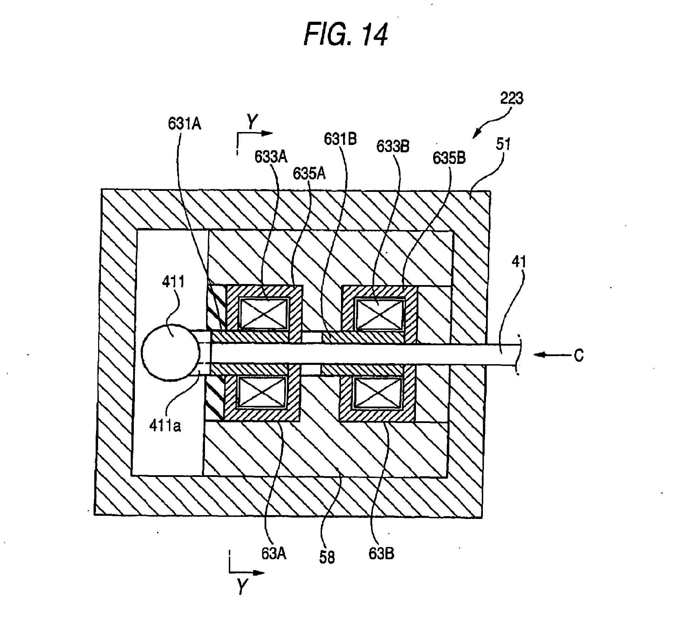

Fig. 14 isapartial cross sectionalviewshowingadetailed constructionof a sensorportion incorporated into a power assist clutch system which is a second embodiment. In the figure, a sensor portion 223 is assembled into the clutch lever 31 of the handle 35 of a motorcycle, like the sensor portion 123 (see Fig. 3) described in the first embodiment.

The construction of the power assist clutch system except the sensor portion 223 and the control method of the power assist clutch system are substantially the same as in the first embodiment.

Also in the instant embodiment, a load applied to the driver when the clutch lever 31 of a motorcycle is operated is detected for the control. Any of other physical quantities (rotational angle, linear displacement, rotational torque, and the like) than the load may be detected for the same purpose, as in the first embodiment.

A sensor fixing part 58 for fixing two magnetostrictive load sensors 63A and 63B is provided in the sensor portion 223 shown in Fig. 14. The sensor fixing part 58 has a protruded part, which vertically extends, in the cross section shown in Fig. 14.

A bottom surface part (a surface of the load receiving part closer to the protruded part is handled as an upper surface) of a case 635A of the magnetostrictive load sensor 63A and an upper surface part of a case 635B of the magnetostrictive load sensor 63B are fit to the protruded part.

An upper end of a load receiving part 631A of the magnetostrictive load sensor 63A is in contact with the end 411 of the wire 41, and is capable of directly detecting a load applied to the wire 41. Accordingly, the end 411 shown in Fig. 14 contains a contact part 411a having a planar surface, which may contact with the upper end of the magnetostrictive load sensor 63A. A shape of the contact part is presented by way of example, and the contact part may take any other shape than the illustrated one if the contact part so shaped can contact with the upper end of the load receiving part 631A.

Construction of the magnetostrictive load sensors used in the embodiment will be described. Those two magnetostrictive load sensors are the same in shape. In the description which does not require discrimination of those sensors one from the other, those sensors are designated representatively by a single reference numeral not having letters A and B.

The magnetostrictive load sensor 63 takes a hollowed cylindrical shape through which the wire 41 passes. The magnetostrictive load sensor 63 includes a load receiving part 631 for receiving a load from outside, a coil 633 wound around the load receiving part 631, and a case 635 of ferromagnetic material for containing the load receiving part 631 and the coil 633. The coil 633 is contained in a bobbin, made of Bakelite, nylon or the like, which is disposed around the load receiving part 631.

The load receiving part 631 is a magnetostrictive element shaped like a rod, as of the magnetostrictive load sensors 23A and 23B in the first embodiment, and has a hollowed part through which the wire 41 passes. The wire 41 is inserted into the hollowed part of the load receiving part 631 in a state that it is in close contact with the inner surface of the hollowed part.

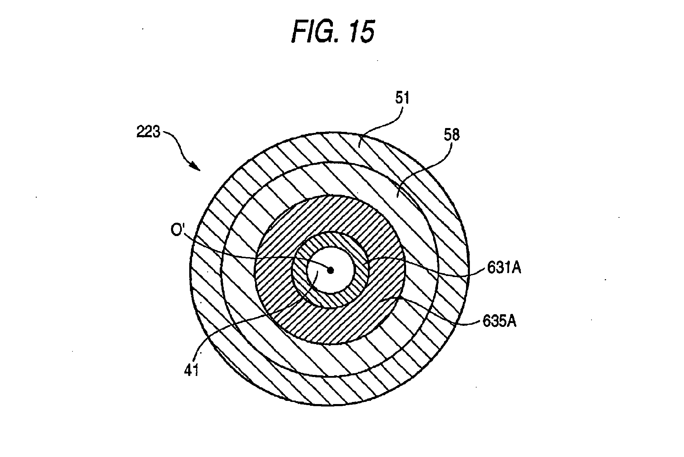

As shown in Fig. 15 showing a cross sectional view taken on line XV - XV when viewed in a direction of an arrow C in Fig. 14, the center of a circle of the cross section of the case 635A is coincident with that of a ring of the load receiving part 631A. In other words, the cross section of the magnetostrictive load sensor 63A is point symmetrical with respect to a center axis O' of the wire 41 (The same thing is true for the magnetostrictive load sensor 63B.). As a result, a load applied to the wire 41 in its axial direction can be detected on the same axis, and the upper end of the load receiving part 631A uniformly receives a force. This results in enhancement of the measurement accuracy.

The number of turns of the coil 633 wound around the load receiving part 631 is selected to produce a magnetic intensity necessary for flux saturation when a given current is fed to the coil 633. A flux developed by the current flowing through the coil 633 thus wound is stabilized by the load receiving part 631 made of ferromagnetic material and the case 635. The load receiving part 631 and the case 635 cooperate to form a magnetic path for the flux.

As described above, the end 411 of the wire 41 abuts on the upper end of a protruded part of the load receiving part 631A of the magnetostrictive load sensor 63A, which is protruded from the case 635A. The upper end of the load receiving part 631A, which is closer to the clutch side, is pressed by a pre-load applied to the end 413 of the wire 41 by a torsion spring.

A bottom surface part of the case 635B of the magnetostrictive load sensor 63B is in contact with the sensor fixing part 58. The upper end of the load receiving part 631B of the magnetostrictive load sensor 63B never receives a load caused by pressing of the wire 41 since it is fit into a gap between adjacent protrusions of the sensor fixing part 58.

Therefore, when the clutch lever 31 is operated, only the magnetostrictive load sensor 63A receives a load, so that a difference is produced between the currents flowing through the two magnetostrictive load sensors. The current difference is amplified by the signal detecting portion 125, whereby a load applied when the clutch lever 31 is operated can be detected.

When the controller portion 15 receives an output signal based on the detected load, the controller portion 15 executes an arithmetic operation for obtaining an optimum assist force in accordance with the sensor output signal. And, it sends a control signal for generating an assist force based on the operation result to the assist drive portion 17.

The sensor portion 223 contains magnetostrictive load sensors 63A and 63B which have load receiving parts located on the same axis as the axis (center axis of the wire 41) to which the load is applied. This feature enables the magnetostrictive load sensors to uniformly receive a load applied in the axial direction of the wire 41 on the same axis, thereby improving the measurement accuracy.

In the sensor portion 223, there is no need of using a special load distributing mechanism to distribute the load to the magnetostrictive load sensors. Therefore, the magnetostrictive load sensor is constructed by using a smaller number of parts than in the conventional sensor. This leads to cost reduction.

With this feature, the sensor portion 223 per se is made compact in layout. The sensor portion has good design. The sensor portion, after post-attached, has an external appearance presenting less unnatural feeling.

The magnetostrictive load sensor 63 of the instant embodiment may be engaged with the joint portion 19 as in the first embodiment, as a matter of course.

The second embodiment described above has advantages comparable with those of the first embodiment.

In the embodiment, the sensor portion having the magnetostrictive load sensors whose load receiving parts are hollowed is applied to the detector portion, whereby the system is more reduced in size.

It should be understood that the construction of the magnetostrictive load sensor that may be used in the embodiment is not limited to the above mentioned one.

The load receiving part 631 may be fit to the case 635 till it reaches the bottom surface part of the sensor. By so doing, the load can be received by the whole load receiving part, not through the case. Accordingly, it is superior to the magnetostrictive load sensor 63 in the sensitivity and the response.

A coated part may be formed on the internal wall of the hollowed part which will be in close contact with the wire 41. In this case, to form the coated part, polyacetal, Teflon (trade mark) tube, hard resin, e.g., fluorocarbon resin, or a non-magnetic metal of SUS304, SUS316 or the like as austenite 188 stainless steel. With provision of the coated part, when the wire 41 is inserted into the hollowed part of the load receiving part 631 in a close-contact manner, the coated part provides a sliding property with respect to the wire 41 and protects the load receiving part 631 from a bending stress generated when the wire 41 moves and a load is applied.

Further, a flange-shaped reinforcing part may be provided at a location near a boundary between the case 635 of the load receiving part 631 of the magnetostrictive load sensor 63 and the bottom surface part of the case 635 (not shown). In this case, a ratio of a thickness of the bottom surface part to the outside diameter of the load receiving part 631 is appropriately adjusted in order to prevent that the bottom surface part of the case 635 is shearbrokenbya loadappliedto the load receiving part 631, whereby a further size reduction is secured. The reinforcing part may take many shapes, such as a stepped shape having one or plural steps, a tapered shape, a rounded shape and the like

An insulating film made of an insulating material, e.g., rubber or resin, may be formed on a coil contact part of at least the load receiving part of any of the magnetostrictive load sensors by coating, painting, spraying, or the like. If so done, the coil may be wound directly on the load receiving part without the bobbin. To form the insulating film, spraying of insulating material, e.g., silicone, may be utilized.

Additionally, the load receiving part and the case may be made of a ferromagnetic material having a porous structure (a structure having porosity and permeability). When comparing with the ferromagnetic material having the porous structure with the single bulk body, an average effective diameter of the former is smaller than that of the latter. A frequency characteristic of the former is good.

Accordingly, if a network of a metal foam formed by such a ferromagnetic material is used for the load receiving part, a desired sensitivity can be obtained without reducing the outside diameter of the load receiving part. It is possible to prevent deterioration of a strength of the load receiving part, which arises from the reduction of size and weight of the magnetostrictive load sensor. Additionally, in this case, the load receiving part and the case may be produced by molding. In other words, there is no need of using cutting process or the like. Cost reduction by mass production is realized.

All of the magnetostrictive load sensors have the load receiving parts each consisting of a single magnetostrictive element having a hollowed part. Alternatively, the load receiving part may be formed with, for example, a plurality of solid rods made of ferromagnetic material. The load receiving part is formed by arranging those solid rods such that the center axes of the rods in the longitudinal direction (height direction of the solid rod) pass a circumference of a circle and are parallel to one another. Accordingly, a cylindrical part which is made of a material similar to that of the coated part and inscribed on the solid rods, is provided between the load receiving part and the hollowed part. The load receiving part is fixed by the cylindrical part.

The magnetostrictive load sensor used in the embodiment may be variously be changed in design so long as it has a hollowed part into which the wire 41 is inserted. Those load sensors, which have been changed in design, have similar advantages.

### (Third Embodiment)

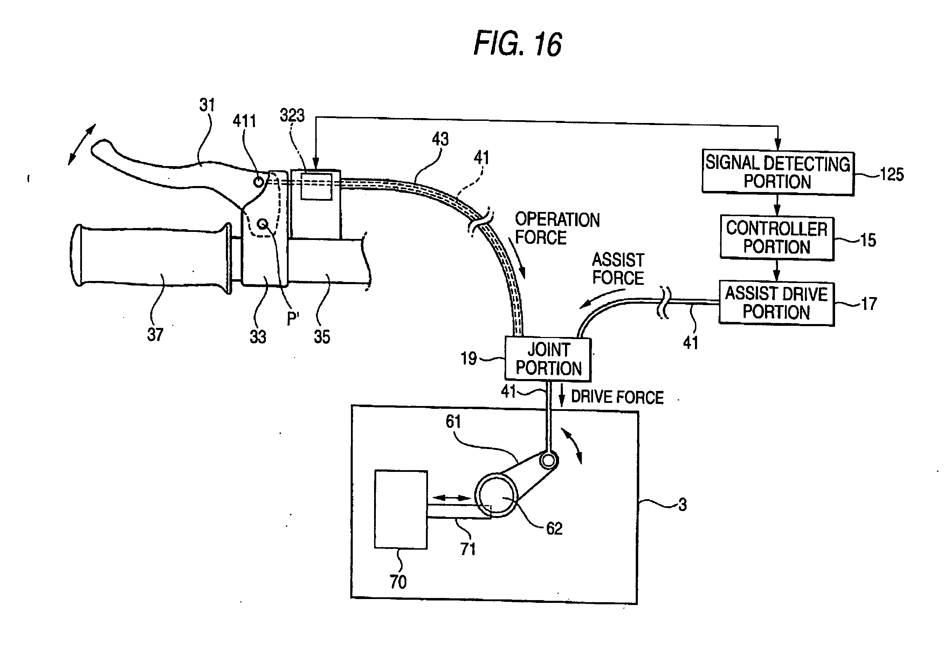

Fig. 16 is a diagram schematically showing a power assist clutch system which is a third embodiment. While the sensor portion is contained in the clutch lever 31 in the two embodiments mentioned above, in the instant embodiment, a sensor portion 323 is provided at a location corresponding to the wire fixing part in the embodiments mentioned above to extract an increase of a load caused by a friction between the wire 41 and the outer tube 43.

### <System configuration>

In the power assist clutch system shown in Fig. 16, unlike that of Fig. 8, the joint portion 19 composes a manual operation force and an assist force, and the resultant drive force is transmitted to the pull lever 61 in the driven part 3 through a single wire 41 to thereby effect the clutching and de-clutching operations.

The clutch lever 31 is normally used, while the sensor portion is contained in the clutch lever in the embodiment mentioned above. Ends 411 and 413 of the wire 41, which are engaged with the clutch lever 31, are engaged with the clutch lever 31 per se and the joint portion 19, respectively.

In the joint portion 19, an appropriate pre-load is applied to the wire 41 for transmitting an operation force from the clutch lever 31 to the joint portion 19, thereby to stretch the wire 41. The wire 41 for transmitting a drive force as the sum of the forces of the joint portion 19 and the pull lever 61 is tensed by a torsion spring in contact with the rotary shaft of the pull lever 61, to thereby prevent the wire from slacking.

The power assist clutch systemshown in Fig.16 is presented by way of example, and the power assist clutch system (the pull lever corresponds to the joint portion 19 per se) as shown in Fig. 8 may be used also in the instant embodiment, as a matter of course.

The remaining system configuration of the instant embodiment is the same as that of the first embodiment (see Fig. 8), and hence, no further description of it will be omitted.

### <Construction of the sensor portion>

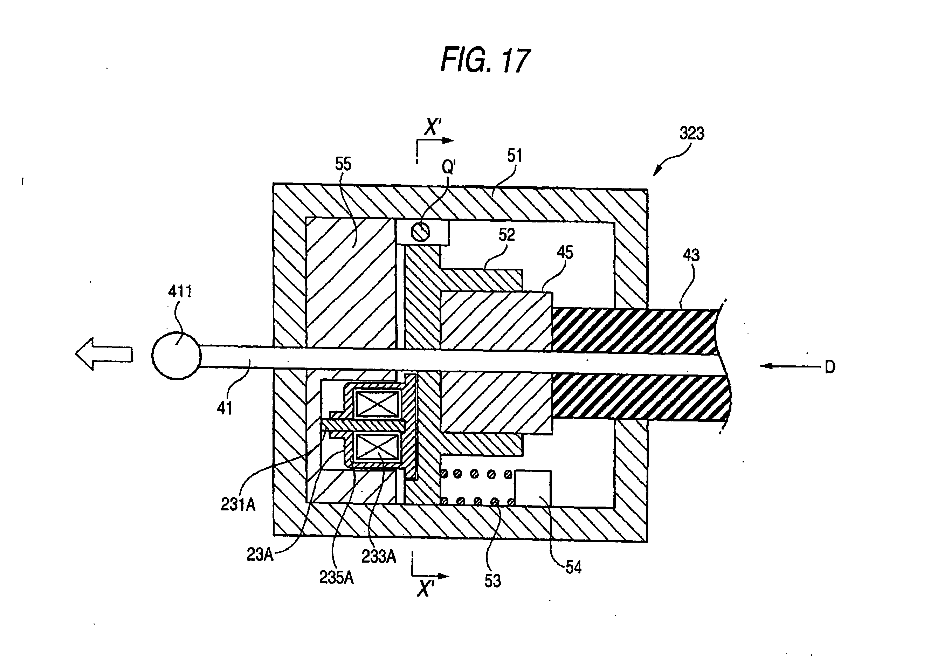

A specific construction of the sensor portion 323 will be described. Fig. 17 shows a detailed construction of the sensor portion 323 having two load sensors when it is installed at a handle 35 near a clutch lever 31. Also in this embodiment, the sensor portion 323 may be installed at a location corresponding to the wire fixing part of the clutch cable side. In the description to follow, it is installed onto the handle side.

The sensor portion 323 detects a load applied to the driver when the clutch lever 31 is operated. Specifically, it detects an increase of a load value, which arises from a friction between the wire 41 which is connected to the clutch lever 31 and at the other end to the joint portion 19 (or the driven portion 3), and the outer tube 43.

Fig. 17 is a partial sectional view showing a detailed construction of a sensor portion 123 when a magnetostrictive load sensor is used for the load sensor. The magnetostrictive load sensor used in the instant embodiment is a magnetostrictive load sensor 23 having the same construction as in the first embodiment.

The sensor portion 323 further includes a holder 52 into which a tube end 45 of an outer tube 43 covering the wire 41 passing through a sensor unit cover 51, is fit. One end of an elastic member 53, such as a spring, abuts on the holder 52, and the other end thereof is fixe by a fixing part 54, whereby a predetermined load is applied to the holder in advance.

A case 235A of a magnetostrictive load sensor 23A is in contact with a planar surface of the holder 52 which is opposite to its planar surface into which the tube end 45 is fit. When the holder 52 is turned about a rotational center Q by pressing of the outer tube 43, a load receiving part 231A of the magnetostrictive load sensor 23A is pressed by a pressing member 55. As a result, a load applied to the magnetostrictive load sensor 23A varies in value. A change of impedance caused by the load value variation is detected by the signal detecting portion 125. Incidentally, a distance the magnetostrictive load sensor 23A moves when it receives a load as the result of operation of the clutch lever 31 is about 1mm at most.

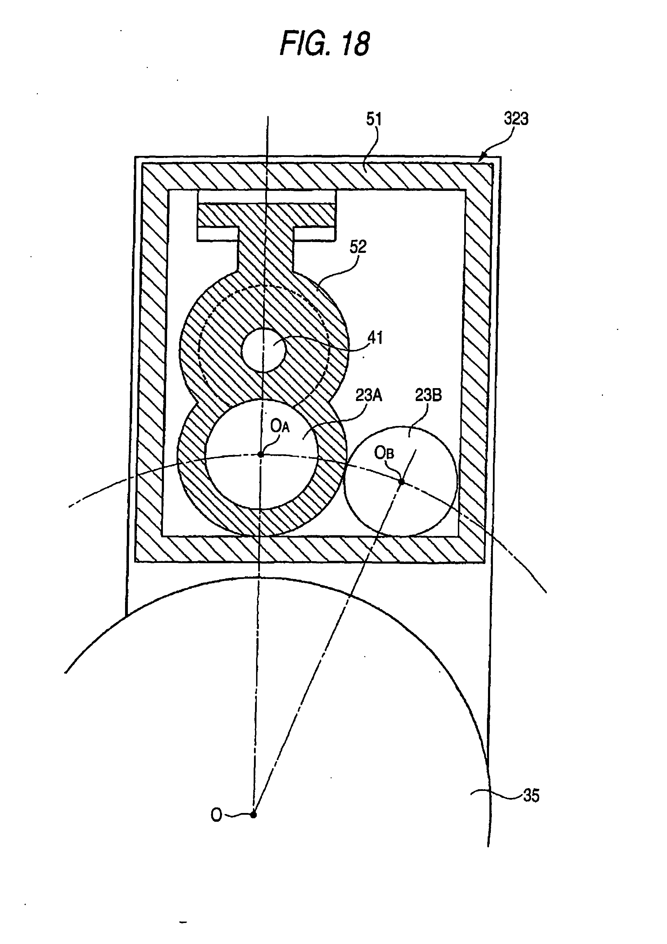

As shown in Fig. 18 which is a cross sectional view taken on line XVIII - XVIII when viewed in a direction of an arrow D in Fig. 17, also in the instant embodiment, another magnetostrictive load sensor 23B having the same construction as of the magnetostrictive load sensor 23A is provided in the sensor portion 323. A fixed load is constantly applied to a load receiving part 231B (not shown) of a magnetostrictive load sensor 23B, as in the magnetostrictive load sensor 23B in the first embodiment. When the clutch lever 31 is operated, a difference is produced between the loads applied to the magnetostrictive load sensors 23A and 23B. The load difference is differentially amplified by the signal detecting portion 125, whereby a load applied to the clutch lever 31 can be accurately detected.

The two magnetostrictive load sensors 23A and 23B are located close to each other. The center axes OA and OB of the load receiving parts pass through a circle centered at the center axis O of the handle 35. More preferably, the two magnetostrictive load sensors are symmetrically arranged with respect to a line X' - X' in Fig. 17. When the sensors are thus arranged, the temperature characteristic is enhanced, and the detection accuracy of the load detector device 111 is remarkably enhanced.

The sensor portion 323 thus constructed may be attached without greatly changing the conventional wire type clutch system. Accordingly, the power assist clutch system 1 may be post-attached.

The two magnetostrictive load sensors are located under the turning center Q of the holder 52. If so done, the workability enhancement and the size reduction of the sensor portion 323 are both achieved.

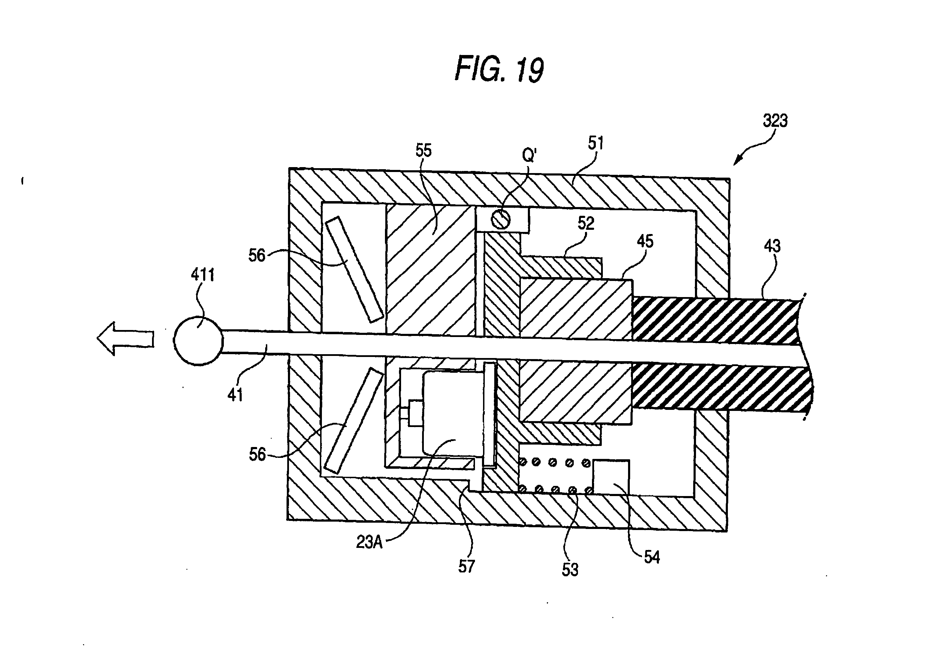

Also in the instant embodiment, an overload preventing mechanism may be additionally incorporated into the sensor portion 323. Fig. 19 is a partial sectional view showing a detailed construction of the sensor portion 323 additionally equipped with an overload preventing mechanism. In the figure, an external appearance of the magnetostrictive load sensor 23A is illustrated, and its specific internal construction is the same as of that shown in Fig. 17, as a matter of course.

Abasic construction of the overload preventing mechanism is substantially the same as that (see Fig. 6) of the first embodiment, and hence, its detailed description is omittedhere. Reference numerals for designating the respective portions in Fig. 17 are the same as those designating the corresponding portions in Fig. 6.

With provision of the overload preventing mechanism, the durability of the magnetostrictive load sensor 23A is improved, as a matter of course.

The third embodiment described above has advantages comparable with those of the two embodiments mentioned above.

### (Fourth Embodiment)

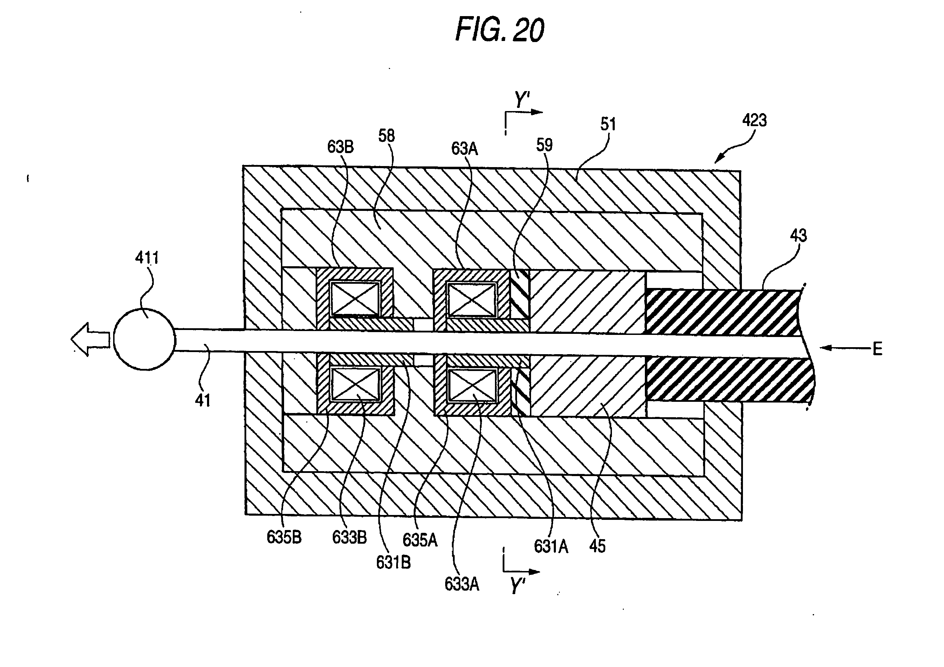

Fig. 20 is a partial cross sectional view showing a construction of a sensor portion in a power assist clutch system which is a fourth embodiment. A sensor portion 423 is installed within a wire fixing part near the clutch lever 31 of the handle 35 for the motorcycle, as the sensor portion 323 (see Fig. 16) is so installed in the third embodiment.

A sensor fixing part 58 for fixing two magnetostrictive load sensors 63A and 63B is provided in the sensor portion 423 shown in Fig. 20. The sensor fixing part 58 has a protruded part, which vertically extends, in the cross section shown in Fig. 20.

Abottom surface part (when a surface of the load receiving part closer to the protruded part is handled as an upper surface, it corresponds to a surface thereof opposite to the upper surface) of a case of the magnetostrictive load sensor 63A and an upper surface part of the magnetostrictive load sensor 63B are fit to the protruded part. The magnetostrictive load sensors 63A and 63B are substantially the same as those in the second embodiment, and hence the same reference numerals as those in the second embodiment are used for designating those sensors.

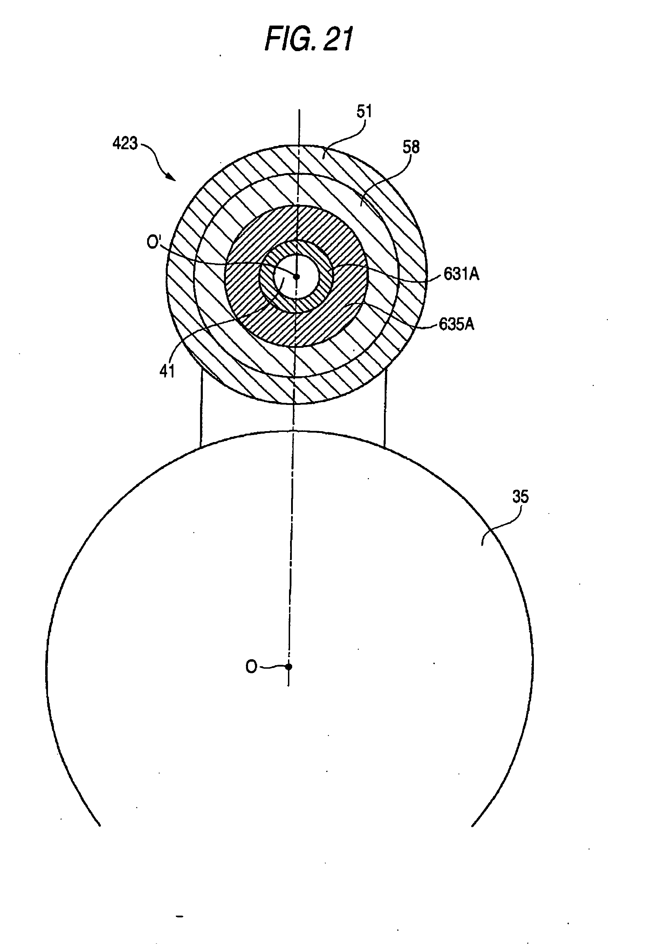

As shown in Fig. 21 which is a cross sectional view taken on line XXI - XXI when viewed in a direction of an arrow E in Fig. 20, the center of a circle of the cross section of the case 635A is coincident with that of a ring of the load receiving part 631A. In other words, the cross section of the magnetostrictive load sensor 63A is point symmetrical with respect to a center axis O' of the wire 41 (The same thing is true for the magnetostrictive load sensor 63B.). As a result, a load applied to the wire 41 in its axial direction can be detected on the same axis, and the upper end of the load receiving part 631A uniformly receives a force. This results in enhancement of the measurement accuracy.

A tube end 45 made of aluminum or the like abuts on the upper end of a protruded part of the load receiving part 631A of the magnetostrictive load sensor 63A, which is protruded from the case 635A. The upper end of the load receiving part 631A is pressed by a pressing load which is caused by a pre-load applied to the joint portion 19 or the pull lever 61. A gap between the magnetostrictive load sensor 63A and the tube end 45 is filled with a spacer 59 made of resin or the like, whereby the load receiving part 631A and the case 635A are protected.

Abottomsurfacepart of a case 635B of the magnetostrictive load sensor 63B is in contact with a sensor fixing part 58. The upper end of the load receiving part 631B of the magnetostrictive load sensor 63B is fit to a gap between the protrusions of the sensor fixing part 58. Accordingly, it does not receive a load by the pressing of the wire 41.

Accordingly, when the clutch lever 31 is operated and the pressing force is applied from the wire 41, a load is applied to only the magnetostrictive load sensor 63A. As a result, a difference is produced between the current flowing through the two magnetostrictive load sensors. The difference current signal is amplified by the signal detecting portion 125, and a load applied when the clutch lever 31 is operated is detected.

When the controller portion 15 receives a sensor output signal based on the detected load, the controller portion 15 executes a computing process for obtaining an optimum assist force according to its sensor output signal, and sends a control signal for generating an assist force based on the computing result to the assist drive portion 17.

The sensor portion 423 described above has substantially the same construction as of the magnetostrictive load sensor 63 in the second embodiment. Accordingly, the instant embodiment realizes enhancement of measurement accuracy and reduction of size and weight of the whole load detector device, as in the second embodiment.

A construction of the power assist clutch system except the sensor portion 423 and the system control method are the same as those in the above-mentioned embodiment. Hence, no further description of it will be given.

The fourth embodiment has advantages comparable with those of the above-mentioned embodiments.

Particularly in the instant embodiment, the sensor portion including the magnetostrictive load sensors whose load receiving parts each has a hollowed shape is applied to the detector portion. Therefore, the system size is considerably reduced. The instant embodiment, like the second embodiment, succeeds in realizing the size and weight reduction of the whole load detector device.

The construction of the magnetostrictive load sensor used in the instant embodiment is not limited to that described above, but it may be variously be changed in design so long as it has a hollowed part into which the wire 41 is inserted, and those load sensors, which have been changed in design, have similar advantages, as in the second embodiment.

### (Fifth Embodiment)

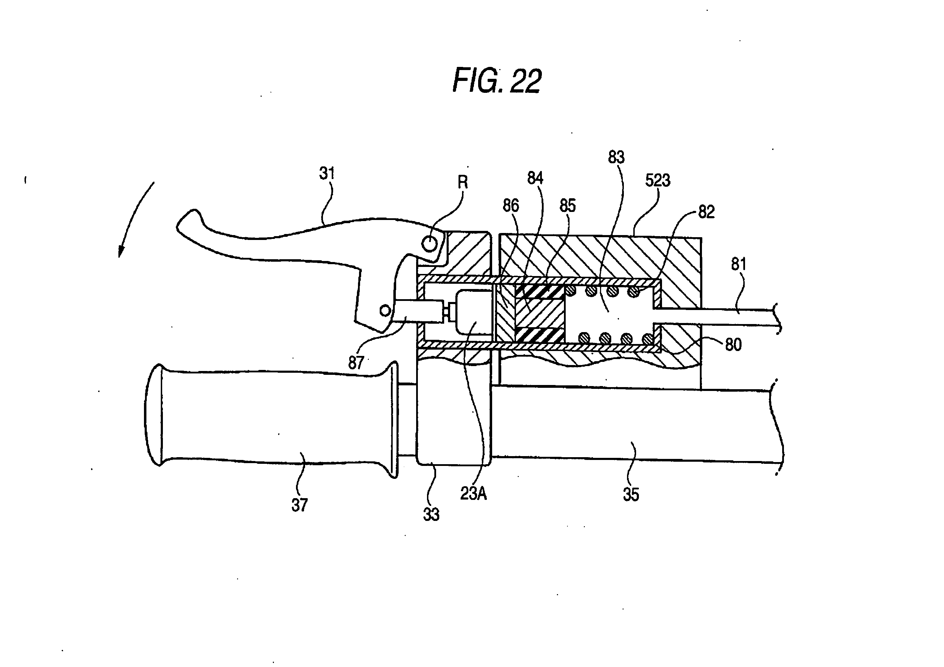

Fig. 22 is a partial cross sectional view showing a detailed construction of a sensor portion in a power assist clutch system which is a fifth embodiment. In the instant embodiment, a hydraulic piping (oil hose) is used for the drive force transmission system.

In a sensor portion 523 shown in Fig. 22, a hydraulic pressure part 83 into which an elastic member 82, such as a spring, is assembled is separated by a slidable sealing member whose hollowed part made of a brass 84 is covered with resin 85. A magnetostrictive load sensor 23A which is the same as that in the first embodiment is placed between a pressing member 86 for pressing the sealing member through the operation of the clutch lever 31 to move the sealing member and a member 87 for directly receiving a pressure from the clutch lever 31, whereby a load applied when the clutch lever 31 is operated is detected. Also in the instant embodiment, the magnetostrictive load sensor 23A and the magnetostrictive load sensor 23B having the same configuration as of the former are symmetrically arranged, as in the first embodiment. Accordingly, the signal detecting portion 125 differentially amplifies a difference between the signals from the two magnetostrictive load sensors, and sends a sensor output signal as the amplified one to the controller portion 15.

Also when the sensor portion 523 is used, a reduced number of parts is required. As in the second embodiment, its design is good, and it has a low weight and is compact. The sensor portion, after post-attached, has an external appearance presenting less unnatural feeling.

Further, a conventional hydraulic system may be modified and altered afterwards. Accordingly, cost to post-attach the power assist clutch system is reduced.

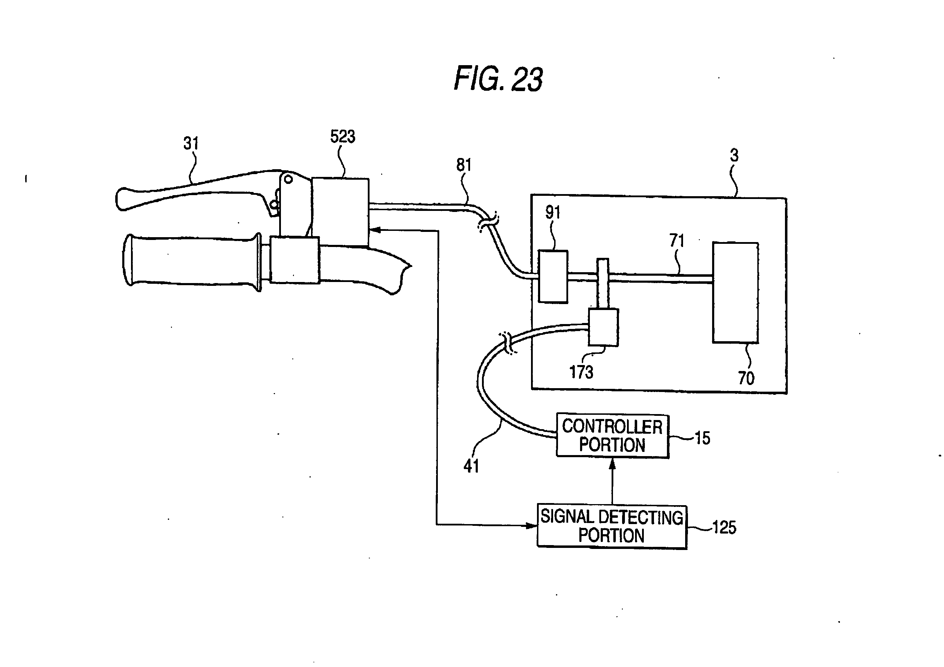

Fig. 23 is a diagram schematically showing the power assist clutch system using the sensor portion 523.

In the power assist clutch system 1 shown in the figure, an oil pressure generated in the sensor portion 523 by operating the clutch lever 31 is transmitted to a release cylinder 91 of a clutch part 70 via an oil hose 81. The oil pressure transmitted to the release cylinder 91 moves a push rod 71 to press the pressure plates within the clutch part 70 to thereby effect engaging/disengaging of the clutch.

After the load value detected by the sensor portion 523 is differentially amplified by the signal detecting portion 125, the amplified one is output as a sensor output signal to the controller portion 15. And a control signal based on the sensor output signal is transmitted to a motor unit 173. The motor unit 173 is coupled with the push rod 71 in the driven portion 3, and generates an assist force based on the control signal. The assist force generated assists the push rod 71 in its movement. Specifically, an assist force for the clutch releasing is applied to the push rod 71 which operates for clutch releasing according to the operation of the clutch lever 31. In this sense, in the case shown in Fig. 23, the release cylinder 91 and the motor unit 173 cooperate to form a drive force generating means (drive force generating portion).

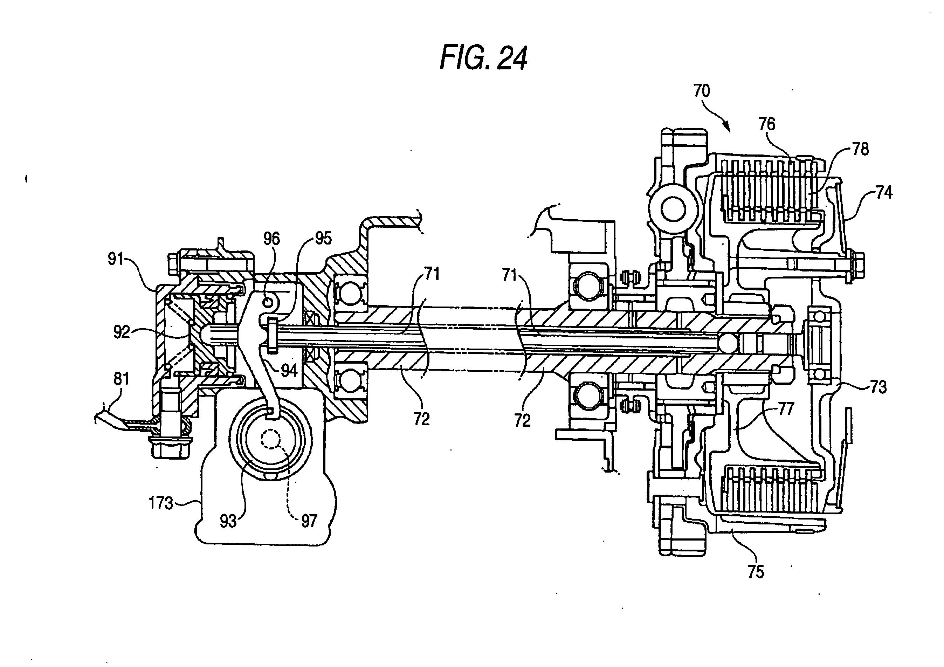

Fig. 24 is a partial cross sectional view showing a key portion of a clutch portion 70 of the hydraulic type. In the case shown, the other end of the push rod 71 coupled to a pressure plate 73 of the clutch portion 70 is brought into contact with a piston 92 of a release cylinder 91 to which the oil horse 81 from the clutch lever 31 is connected. Oil is fed under pressure into the release cylinder 91 via the oil hose 81 by operating the clutch lever 31. The piston 92 is displaced by the oil to move the push rod 71 to the clutch portion 70.

In Fig. 24, a mechanism for transmitting the assist force to the push rod 71 is made up of a motor unit 173, a coil spring 93, provided in the motor unit, as a twist spring having a low elastic constant, and a folk member 94, shaped like Y. In this case, a flange part 95 for receiving an assist force generated in the motor unit 173 through the folk member 94 is formed on the push rod 71.

A more specific assist force generating mechanism will be described. A tilt guide for preventing the coil spring 93 from falling down is coaxially secured to the output shaft 97 of the motor unit 173 (not shown). A coil spring 93 is disposed spaced from and surrounding the guide.

The folk member 94 is supported at first ends (the top ends of a letter Y) by a shaft 96 fixedto apredeterminedposition, in a swing fashion. The coil spring 93 is fixed at one end to an output shaft 97 of the motor unit 173 at a position near the base of the tilt guide. The other end of the coil spring 93 is coupled to the other end or movable end (the lower end of the letter Y) of the folk member 94. A mid point of the folk member 94 is brought into contact with the flange part 95 of the push rod 71, while holding the push rod 71.

When the motor unit 173 is driven by a control signal based on an operation force of the clutch lever 31, the folk member 94 is pressed through the coil spring 93 by a rotational force of the output shaft 97. As a result, an assist force for pressing the flange part 95 of the push rod 71 toward the clutch portion 70 through the folk member 94 is generated, and it assists the push rod 71 in pressing the pressure plate 73.

The method of controlling the power assist clutch system according to the instant embodiment is the same as in the embodiments mentioned above (see Fig. 13).

The fifth embodiment has advantages as obtained by other embodiments in which a drive force is transmitted by use of the wire.

### (Sixth Embodiment)

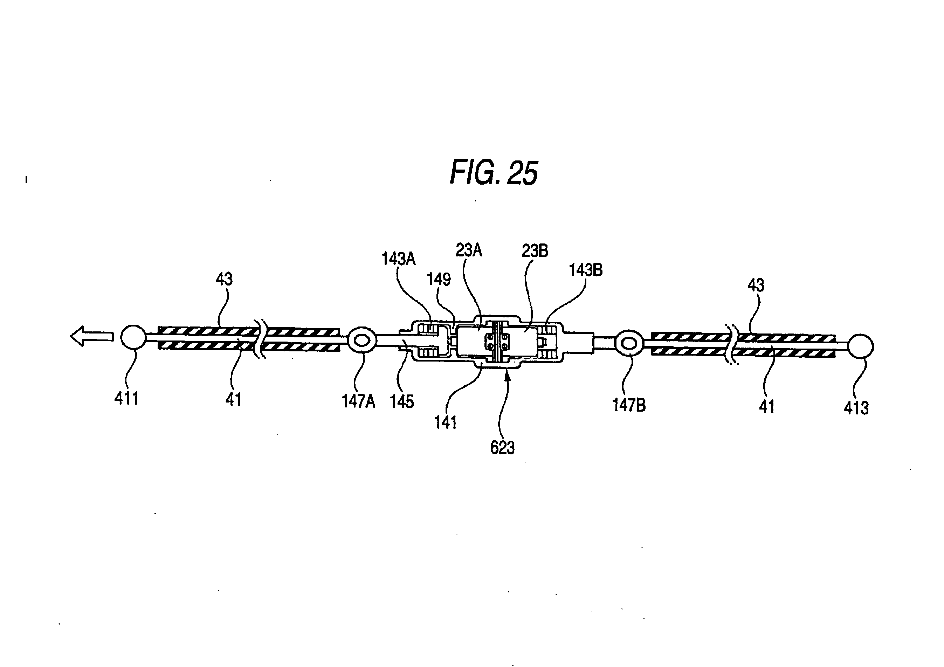

Fig. 25 is a partial cross sectional view showing a construction of a sensor portion in a power assist clutch system which is a sixth embodiment. In a sensor portion 623 shown, two magnetostrictive load sensors 23A and 23B (having substantially the same constructions as in the first embodiment), which have the same configurations, are arranged symmetrically with respect to the surfaces of the sensors which are put in contact with each other. Those sensors are located at a mid point of the wire 41. In Fig. 25, an end 411 of the wire is engaged with the clutch lever 31, and another end 413 thereof is engaged with the driven portion 3.

The two magnetostrictive load sensors 23A and 23B are disposed within a sensor container 141, while being movable in the axial direction of the wire 41. Elastic members 143A and 143B, such as springs, urge the sensors in directions being opposite to each other.

A pressing member 145, shaped like a flange, is placed in the sensor container 141. A preset load of the elastic member 143A is selected to be larger than that of the elastic member 143B (about 10kg weight). An end of a protruded part of the load receiving part 231A of the magnetostrictive load sensor 23A is standstill while being in contact with the flange-shaped part of the pressing member 145. An end of a protruded part of the load receiving part 231B of the magnetostrictive load sensor 23B is supported by the elastic member 143B so as not to receive a load from outside.

A flange-shaped stopper 149 integral with the sensor container 141 is fit to and held on the upper surface of the case 235A corresponding to the protruded part of the load receiving part 231A, thereby preventing an overload from being applied to the magnetostrictive load sensor 23A. Accordingly, even if a large external load acts the sensor portion, a load of a predetermined value or lower acts on the magnetostrictive loadsensor23A. Accordingly, themagnetostrictiveloadsensor 23A is effectively protected, and its durability is enhanced.

In Fig. 25, the load receiving part 231A is brought into contact with the pressing member 145, and directly receives a load. Alternatively, a spacer of resin or the like is fit into between the load receiving part 231A and the pressing member 145. A pressing load is received through the spacer.

The wire 41 is cut at a mid point into two wires, and the sensor container 141 is located between those two separate wires. One end of the sensor container 141 is connected to one of the separated wires at a wire joining part 147A , while the other end is connected to the other separate wire at another wire joining part 147B.

When the sensor portion 623 thus constructed is used, the wire 41 is moved to the end 411 when the clutch lever 31 is operated. As a result, a load applied to the magnetostrictive load sensor 23A is decreased. A load applied to the clutch lever 31 may be detected by differentially amplifying an impedance variation caused by the load decrease by the load detector device 111, as in the above mentioned embodiments.

Further, the sensor container 141 and the pressing member 145 are rotatable relatively to each other. Accordingly, the twist and bending of the sensor portion 423 are adjusted to a minimum. As a result, highly accurate load detection is secured. Useless operation generated by vibration of the engine or the like is removed, and the durability of the sensor portion 623 per se is improved.

There is no need of fixing the sensor portion 623 described above to a predetermined location. It may be attached to any desired mid position of the wire 41. In this respect, a freedom of layout is high. In an example, the sensor portion 623 is placed at a position hidden by the fairing (cowling) of the motorcycle. An external appearance of the vehicle remains unchanged before and after the sensor portion is attached.

Additional advantages are that the mounting is easy and changing or altering of parts already used is not required.

A strain gauge tension sensor other than the magnetostrictive load sensormaybe applied to the sensorportion 623. In this case, a load is detected based on a tension variation of the wire 41 when the clutch lever 31 is operated.

The construction of the power assist clutch system and the method of controlling the power assist clutch system, except the sensor portion 623, are the same as those in the embodiments mentioned above. Accordingly, the instant embodiment has advantages as of the embodiments mentioned above.

The power assist clutch system and the method of controlling the power assist clutch system are applied not only to the clutch system of the two-wheel vehicle, but also to the clutch system of the four-wheel vehicle. In this case, the sensor portion is attached to a location within a car body on the rear side of the clutch pedal (clutch lever) when viewed from the driver seat. By so doing, a load of the driver when he operates the clutch is lessened.

### Industrial Applicability

As seen from the foregoing description, with the teaching of the invention there is provided a power assist clutch system which lessens a load of the driver when he operates a clutch operation part and generates an assist force in accordance with an operation input condition of the clutch operation part to thereby realize a quick and smooth control, a method of controlling the power assist clutch system and a program for controlling the power assist clutch system.

The description above discloses to achieve the above object, (amongst others) a first embodiment which provides a power assist clutch system for effecting, in an automotive having a clutch; a drive force transmission member for transmitting a drive force to the clutch; and a clutch operation part coupled to the clutch via the drive force transmission member, an assist force for assisting an intermittent operation of the clutch caused by an operation force transmitted from the clutch operation part, the power assist clutch system including: a detecting portion for detecting an operation force that operates the clutch operation part; a control portion for outputting a control signal for controlling the assist force based on the operation force detected by the detecting portion; an assist force generating portion for generating the assist force in accordance with the control signal output from the control portion; and a drive force generating portion for generating a drive force for operating the clutch by combining the operation force transmitted through the drive force transmission member and the assist force.

Also, a second embodiment provides a method for controlling a power assist clutch system for effecting, in an automotive having a clutch; a drive force transmission member for transmitting a drive force to the clutch; and a clutch operation part coupled to the clutch via the drive force transmission member, an assist force for assisting an intermittent operation of the clutch caused by an operation force transmitted from the clutch operation part, the method including: a detecting step for detecting an operation force when a driver operates the clutch operation part; a control step for outputting a control signal for controlling the assist force based on an operation force detected by the detecting means; an assist force generating step for generating the assist force in accordance with the control signal output from the control step; and a drive force generating step for generating a drive force for operating the clutch by combining the operation force transmitted through the drive force transmission member and the assist force.

Further, a third embodiment provides a program for controlling a power assist clutch system for effecting, in an automotive having a clutch; a drive force transmission member for transmitting a drive force to the clutch; and a clutch operation part coupled to the clutch via the drive force transmission member, an assist force for assisting an intermittent operation of the clutch caused by an operation force transmitted from the clutch operation part, the program causes a computer to function as control means for outputting a control signal for controlling the assist force in accordance with an operation force detected by a detecting part for detecting the operation force.

The term "computer" in the embodiment means an electronic device including at least a CPU (central processing unit) having operation and control functions, and a memory, such as RAM (random access memory), for electronically storing programs and calculation results.

## Claims

1. A power assist clutch system for effecting, in an automotive having a clutch; a drive force transmission member for transmitting a drive force to the clutch; and a clutch operation part coupled to the clutch via the drive force transmission member, an assist force for assisting an intermittent operation of the clutch caused by an operation force transmitted from the clutch operation part, the power assist clutch system comprising:
a detecting portion for detecting an operation force that operates the clutch operation part;
a control portion for outputting a control signal for controlling the assist force based on the operation force detected by the detecting portion;
an assist force generating portion for generating the assist force in accordance with the control signal output from the control portion; and
a drive force generating portion for generating a drive force for operating the clutch by combining the operation force transmitted through the drive force transmission member and the assist force.

2. The power assist clutch system as claimed in claim 1, wherein the detecting portion includes a sensor portion including first and second sensors for detecting the operation force of the clutch operation part, first and second signal detecting parts, connected to the first and second sensors, for detecting signals output from the sensors, and an amplifying part for amplifying a difference between signals detected in the first and second signal detecting parts.

3. The power assist clutch system as claimed in claim 2, wherein the sensor portion includes a rod-shaped load receiving part made of amagneticmaterial for receiving a load fromoutside, and a coil wound around the load receiving part, and the sensor portion is a magnetostrictive load sensor for detecting a load based on a change of magnetic permeability caused by a strain of the load receiving part, which is due to a load based on an operation force of the clutch operation part applied to the load receiving part magnetized by current flowing through the coil.

4. The power assist clutch system as claimed in claim 3, wherein the load receiving part has a through-hole extending through a region including a longitudinal rod-like center shaft made of magnetic material.

5. The power assist clutch system as claimed in claim 2, wherein the sensor portion includes as the first and second sensors a load sensor for detecting a load applied to the clutch operation part and a position sensor for detecting a position change of the clutch operation part.

6. The power assist clutch system as claimed in claim 2, wherein the sensor portion is provided in the clutch operation part.

7. The power assist clutch system as claimed in claim 2, wherein the sensor portion is provided near the clutch operation part.

8. The power assist clutch system as claimed in claim 2, wherein the sensor portion is attached to a mid part of the drive force transmission member.

9. The power assist clutch system as claimed in claim 1, further comprising an assist force changingportion for changing a ratio of the assist force to the operation force during a process of transmitting an operation force from the clutch operation part.

10. The power assist clutch system as claimed in claim 1, wherein the drive force transmission member is a wire or an oil piping.

11. A method for controlling a power assist clutch system for effecting, in an automotive having a clutch; a drive force transmissionmember for transmitting a drive force to the clutch; and a clutch operation part coupled to the clutch via the drive force transmission member, an assist force for assisting an intermittent operation of the clutch caused by an operation force transmitted from the clutch operation part, the method comprising:
a detecting step for detecting an operation force when a driver operates the clutch operation part;
a control step for outputting a control signal for controlling the assist force based on an operation force detected by the detecting means;
an assist force generating step for generating the assist force in accordance with the control signal output from the control step; and
a drive force generating step for generating a drive force for operating the clutch by combining the operation force transmitted through the drive force transmission member and the assist force.

12. The method for controlling a power assist clutch system as claimed in claim 11, wherein when an operation force detected by the detecting step exceeds a predetermined threshold value, the control step outputs a control signal for controlling the assist force acting on the drive force transmission member.

13. The method for controlling a power assist clutch system as claimed in claim 11, wherein when a stopping state of the clutch operation part continues for a predetermined time or longer, the control step outputs a control signal for gradually decreasing the assist force.

14. The method for controlling a power assist clutch system as claimed in claim 11, wherein the control step controls increasingly or decreasingly a ratio of the assist force to the operation force during a process of transmitting an operation force from the clutch operation part.

15. The method for controlling a power assist clutch system as claimed in claim 11, wherein the control step compares an operation speed of the clutch operation part with a driving speed of an assist force generating part for generating an assist force, and outputs a control signal to make the operation speed and the driving speed equal to each other.

16. A program for controlling a power assist clutch system for effecting, in an automotive having a clutch; a drive force transmissionmember for transmitting a drive force to the clutch; and a clutch operation part coupled to the clutch via the drive force transmission member, an assist force for assisting an intermittent operation of the clutch caused by an operation force transmitted from the clutch operation part, the program causes a computer to function as control means for outputting a control signal for controlling the assist force in accordance with an operation force detected by a detecting part for detecting the operation force.

17. The program for controlling a power assist clutch system as claimed in claim 16, wherein when an operation force exceeds a predetermined threshold value, the control means outputs a control signal for controlling the assist force acting on the drive force transmission member.

18. A program for controlling a power assist clutch system as claimed in claim 16, wherein when a stopping state of the clutch operation part continues for a predetermined time or longer, the control means outputs a control signal for gradually decreasing the assist force.

19. The program for controlling a power assist clutch system as claimed in claim 16, wherein the control means controls increasingly or decreasingly a ratio of the assist force to the operation force during a process of transmitting an operation force from the clutch operation part.

20. The program for controlling a power assist clutch system as claimed in claim 16, wherein the control means compares an operation speed of the clutch operation part with a driving speedof an assist force generating part for generating an assist force, and outputs a control signal to make the operation speed and the driving speed equal to each other.
